# EUROPÄISCHE PATENTSCHRIFT

(11) **EP 2 280 155 B1**
(45) Veröffentlichungstag und Bekanntmachung des Hinweises auf die Patenterteilung: **05.03.2014**
(21) Anmeldenummer: 10005787.6
(22) Anmeldetag: 04.06.2010
(51) Int. Cl.: F01N 3/20, F02B 37/013, F02B 37/18, F02B 37/00

(54) **Verfahren und Vorrichtung zur Reinigung eines Abgasstroms einer abgasaufgeladenen Brennkraftmaschine**
Method and device for cleaning an exhaust gas flow of an exhaust gas turbocharged combustion engine
Procédé et dispositif de nettoyage d'un flux de gaz d'échappement d'un moteur à combustion interne

(30) Priorität: 30.07.2009 DE 102009035692
(43) Veröffentlichungstag der Anmeldung: 02.02.2011
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- EP-A1- 1 892 395
- DE-A1-102007 061 005

## Beschreibung

Die Erfindung betrifft ein Verfahren zur Reinigung eines Abgasstroms einer abgasaufgeladenen Brennkraftmaschine nach dem Oberbegriff des Anspruchs 1. Ferner betrifft die Erfindung eine Vorrichtung zur Reinigung eines Abgasstroms einer abgasaufgeladenen Brennkraftmaschine nach dem Oberbegriff des Anspruchs 9.

Bei der Abgasreinigung bereiten vor allem die Abgasemissionen im Kaltstart Probleme, da die gesetzlich vorgeschriebenen Abgasemissionsgrenzwerte auch nach einem Start eines kalten Motors und damit bei noch nicht betriebswarmem Katalysator eingehalten werden müssen. Von wesentlicher Bedeutung ist hierbei die sogenannte Anspringtemperatur der Katalysatoren. Als Anspringtemperatur wird die Temperatur bezeichnet, bei der ein Katalysator eine Konvertierungsrate von 50% erreicht. Eines der Ziele der Katalysatorauslegung ist es daher, möglichst niedrige Anspringtemperaturen zu erreichen. Um dies zu gewährleisten, werden die Katalysatoren des Nachbehandlungssystems üblicherweise sehr motornah angeordnet, um deren schnelles Aufheizen und damit ein möglichst schnelles Anspringen sicherzustellen:

Der Einsatz der selektiven katalytischen Reduktion, kurz SCR genannt, zur Reduzierung der Stickoxide im Abgasstrom von Brennkraftmaschinen, insbesondere bei mit Luftüberschuss betriebenen Brennkraftmaschinen, ist allgemein bekannt. Als Aktivkomponenten für die in Verbindung mit der selektiven katalytischen Reduktion zum Einsatz kommenden SCR-Katalysatoren eignen sich Vanadiumoxid und/oder Wolframoxid und/oder Titandioxid und/oder eisen- und/oder kupferhaltige Zeolithe und/oder Zirkonoxid. Die Umsetzung erfolgt im Wesentlichen gemäß nachstehender Gleichung:

2NO + 0,5O₂ + 2NH₃ → 2N₂ + 3H₂O (Gleichung 1)

Diese SCR-Reaktion wird durch die Anwesenheit von NO₂ beschleunigt, wodurch die Anspringtemperatur der Katalysatoren merklich abgesenkt wird:

NO + NO₂ + 2NH₃ → 2N₂ + 3H₂O (Gleichung 2)

Das für diese Technologie benötigte NO₂ wird dabei an platinhaltigen Katalysatoren aus dem von der Brennkraftmaschine emittierten Stickstoffmonoxid gemäß der nachfolgenden Gleichung erzeugt:

2NO + O₂ ↔ 2NO₂ (Gleichung 3)

Je nach Ausführung der Katalysatoren, je nach Platingehalt und je nach Anwendungsfall weisen die Katalysatoren Anspringtemperaturen zwischen 180°C bis 330°C auf. Allerdings ist hier zu beachten, dass der NO₂-Anteil an den Gesamtstickoxiden mit steigender Temperatur wieder zurückgeht, da bei hohen Temperaturen das thermodynamische NO/NO₂-Gleichgewicht auf der Seite von NO liegt.

Als Reduktionsmittel für die SCR-Reaktion ist der Einsatz von Ammoniak allgemein bekannt, welches allerdings aufgrund seiner Toxizität oft durch ungefährliche, ammoniakabspaltende Verbindungen, wie Harnstoff oder Ammoniumformiat ersetzt wird. Die Zersetzung erfolgt gemäß nachstehender Gleichung:

(NH₂) 2CO + H₂O → 2NH₃ + CO₂ (Gleichung 4)

Die Zersetzung dieser Stoffe und damit die Freisetzung von Ammoniak sind beim SCR-Verfahren ausschlaggebend für die Einsetzbarkeit des Verfahrens. Da beispielsweise die Zersetzung von Harnstoff nach obiger Gleichung 4 in der Gasphase erst bei 450°C quantitativ gelingt, werden oft sogenannte Hydrolysekatalysatoren eingesetzt, wie dies beispielsweise aus der EP 0 487 886 B1 und der EP 0 555 746 B1 bekannt ist, mittels denen die Zersetzungstemperaturen auf ca. 170°C abgesenkt werden können. Um die Katalysatoren zu verkleinern, aber die Verweilzeit in den Katalysatoren konstant zu belassen, werden diese Hydrolysekatalysatoren zum Beispiel in einem Abgasteilstrom betrieben, der dem Hauptstrom entnommen wird. Dies ist beispielsweise bei der EP 1 052 009 B1 der Fall. Besonders vorteilhaft ist es dabei, den Abgasteilstrom möglichst motornah zu entnehmen, um den Hydrolysekatalysator auf einem hohen Temperaturniveau betreiben zu können.

Verschärft wird das Problem der NH₃-Freisetzung aus NH₃-Vorläufer-substanzen durch die in Leerlauf- und/oder im Schwachlastbetrieb der Brennkraftmaschine sehr geringen Abgasmengen, die bei ca. 10% der Maximalmenge liegen, was dazu führt, dass es durch die endotherme Zersetzung der Reduktionsmittelvorläufersubstanz zu einer merklichen Abkühlung des Abgasteilstroms kommt. Ist die Reduktionsmittelvorläufersubstanz in Wasser gelöst, wie zum Beispiel bei einer wässrigen Harnstofflösung, kommt zusätzlich die Abkühlung des Abgasteilstroms durch die Verdampfungsenthalpie des Wassers hinzu. Dies führt dazu, dass die Abgastemperatur im Abgasteilstrom unter die kritische Temperatur von ca. 170°C absinken kann, so dass eine Zugabe von Reduktionsmittel in diesen Betriebspunkten nicht möglich ist.

Bei abgasaufgeladenen Brennkraftmaschinen ist es daher vorteilhaft, den Abgasteilstrom bereits vor dem Turbolader zu entnehmen und ihn stromab des Turboladers wieder zurückzuführen (DE 102 060 28 A1), da die Abgastemperatur stromauf der Abgasturbine bei Volllast um bis zu 350°C über der Abgastemperatur stromab der Abgasturbine liegt. Der Vorteil dieses Verfahrens liegt darin, dass meist selbst im Leerlauf- und/oder im Schwachlastbetrieb der Brennkraftmaschine eine sichere Zersetzung einer Reduktionsmittelvorläufersubstanz zu zum Beispiel Ammoniak als Reduktionsmittels gewährleistet werden kann.

Der Nachteil dieser Variante liegt allerdings darin, dass durch die Entnahme eines Abgasteilstroms vor Turbolader der Wirkungsgrad der Ladegruppe und damit der Brennkraftmaschine absinkt.

Aus der DE 10 2007 061 005 A1 ist bereits ein gattungsgemäßes Verfahren zur Hydrolyse eines Reduktionsmittels in einem Abgasnachbehandlungssystem bekannt, bei dem die Temperatur an einem Hydrolysekatalysator durch eine aktive Steuerung oder Regelung der über einen Abgasteilstrom geführten Abgasmenge in vorgegebenen Grenzen gehalten wird.

Demgegenüber ist es Aufgabe der vorliegenden Erfindung, ein alternatives Verfahren und eine alternative Vorrichtung zur Reinigung eines Abgasstroms einer abgasaufgeladenen Brennkraftmaschine zu schaffen, mittels der im Leerlauf- und/oder Schwachlastbetrieb der Brennkraftmaschine eine besonders einfache und sichere Reduktionsmittelbereitstellung für eine selektive katalytische Reduktion bewerkstelligt werden kann ohne den Wirkungsgrad der Brennkraftmaschine nennenswert zu verschlechtern.

Diese Aufgabe wird gelöst mit den Merkmalen der unabhängigen Ansprüche. Vorteilhafte Ausgestaltungen sind jeweils Gegenstand der darauf rückbezogenen Unteransprüche.

Gemäß Anspruch 1 wird ein Verfahren zur Reinigung eines Abgasstroms einer abgasaufgeladenen Brennkraftmaschine vorgeschlagen, bei dem Stickoxide aus dem Abgasstrom mittels der selektiven katalytischen Reduktion (SCR) entfernt werden, wobei der Abgasstrom stromauf einer Abgasturbine eines Abgasturboladers und stromauf wenigstens eines SCR-Katalysators in einen in einer Hauptabgasleitung zur Abgasturbine geführten Haupt-Abgasstrom und in wenigstens einen in einer Bypassleitung geführten und an der Abgasturbine vorbeigeführten Bypass-Abgasstrom, der bevorzugt von dem Haupt-Abgasstrom abgezweigt wird, aufgeteilt ist bzw. aufgezweigt wird, wobei dem Bypass-Abgasstrom in definierten Brennkraftmaschinen-Betriebszuständen eine definierte Menge einer zu zersetzenden Reduktionsmittelvorläufersubstanz zugeführt wird, die in einem Reaktor des Bypass-Abgasstroms zu einem Reduktionsmittel, bevorzugt zu Ammoniak, umgesetzt wird, das mittels des Bypass-Abgasstroms vom Reaktor abgeführt und stromauf des SCR-Katalysators dem Haupt-Abgasstrom zugeführt wird. Weiter ist wenigstens eine mittels einer Steuer- und/oder Regelvorrichtung gekoppelte und in Abhängigkeit von definierten Betriebsparametern ansteuerbare Absperr- und/oder Drosseleinrichtung vorgesehen. Erfindungsgemäß ist von der Hauptabgasleitung stromab der Abgasturbine wenigstens eine Abzweigleitung abgezweigt, die stromauf des Reaktors und/oder stromauf einer Einmischstelle für eine Reduktionsmittelvorläufersubstanz in die Bypassleitung einmündet und mittels der ein Abzweigabgasstrom in Abhängigkeit von definierten Brennkraftmaschinen-Betriebszuständen, insbesondere außerhalb eines definierten Leerlauf- und/oder Schwachlastbetrieb der Brennkraftmaschine, und/oder in Abhängigkeit von definierten Schwellwerten, insbesondere in Abhängigkeit von definierten Temperatur- und/oder Abgasmassen-Schwellwerten am oder im oder nach Reaktor und/oder der Abgasströme vor und/oder hinter der Abgasturbine, alternativ oder gegebenenfalls zusätzlich zum Bypass-Abgasstrom gesteuert oder geregelt über die die wenigstens eine Absperr- und/oder Drosselvorrichtung ansteuernde Steuer- und/oder Regelvorrichtung von dem Hauptabgasstrom abgezweigt und der Bypassleitung zugeführt wird.

Als Reduktionsmittelvorläufersubstanzen werden insbesondere Ammoniakvorläufersubstanzen verwendet und hier insbesondere Harnstoff, Harnstoffwasser-Lösung, Ammoniumformiat, Guanidin, Guanidinsalze, insbesondere Guanidinformiat, Ammoniumcarbamat oder dergleichen.

Mit der erfindungsgemäßen Lösung wird vorteilhaft sichergestellt, dass zum einen für die zum Beispiel Ammoniakfreisetzung, insbesondere im Leerlauf-und/oder Schwachlastbetrieb der Brennkraftmaschine, durch die Entnahme des Bypass-Abgasstroms stromauf der Abgasturbine hohe Temperaturen zur Verfügung gestellt werden können und zum anderen der Wirkungsgrad der Ladegruppe und damit der Brennkraftmaschine nicht unnötig verschlechtert wird, indem bei hohen Abgastemperaturen, wie sie üblicherweise außerhalb des Leerlauf- oder Schwachlastbetriebs auftreten, das Abgas stromab der Abgasturbine und nicht mehr stromauf der Abgasturbine entnommen wird.

Sinkt beispielsweise die Temperatur im Haupt-Abgasstrom stromab der Abgasturbine soweit ab, dass damit keine vernünftige zum Beispiel Ammoniak-freisetzung im Reaktor mehr möglich ist, wird die Abzweigung bzw. Entnahme eines Abzweigabgasstromes stromab der Abgasturbine gedrosselt und die Abzweigung bzw. Entnahme des Bypass-Abgasstroms stromauf der Abgasturbine entdrosselt bzw. geöffnet, so dass ein heißer Bypass-Abgasstrom zum Reaktor strömt. Auf Grund der höheren Abgastemperaturen stromauf der Abgasturbine und damit des Bypass-Abgasstromes steigt die Temperatur im Reaktor an und eine zum Beispiel Ammoniak-Freisetzung wird möglich.

Steigt die Temperatur des Haupt-Abgasstromes stromab der Abgasturbine dann wieder auf ein Niveau, das eine gewünschte Reduktionsmittelzersetzung im Reaktor sicherstellt, wird die Abgasmenge, die stromauf der Abgasturbine als Bypass-Abgasstrom abgezweigt bzw. entnommen wird, verringert und die Abgasmenge des Abzweigabgasstromes, der stromab der Abgasturbine entnommen wird, erhöht.

Das heißt somit ganz allgemein, dass gemäß einer besonders bevorzugten Verfahrensführung vorgesehen ist, dass, im Falle einer, einen definierten Temperaturschwellwert überschreitenden Temperatur am oder im oder nach Reaktor und/oder des Bypass-Abgasstroms und/oder im Falle eines einen definierten Temperaturschwellwert erreichenden Haupt-Abgasstroms stromab der Abgasturbine, eine die Menge des abgezweigten Bypass-Abgasstromes regulierende, vorzugsweise in der Bypassleitung angeordnete, erste Absperrund/oder Drosseleinrichtung so angesteuert wird, dass diese die Abzweigung des heißen Bypass-Abgasstromes stromauf der Abgasturbine im Wesentlichen sperrt oder in einem definierten Umfang drosselt. Dieses Verfahren kann zusätzlich verbessert werden, indem ,stromab der Abgasturbine, vorzugsweise in der Abzweigleitung, eine zweite Absperr- und/oder Drosseleinrichtung vorgesehen wird, durch die die Menge des Abzweigabgasstroms regulierende, so angesteuert wird, dass ein definierter Abzweigabgasstrom zur Bypassleitung, bzw. zum Reaktor strömt, wobei bevorzugt vorgesehen ist, dass ein definierter Abzweigabgasstrom solange zur Bypassleitung bzw. zum Reaktor strömt bis die Temperatur dieses Abzweigabgasstroms und/oder die Temperatur am oder im oder nach Reaktor einen definierten Temperaturschwellwert unterschreitet.

Weiter ist hier vorgesehen, dass bei einer, einen definierten Temperaturschwellwert unterschreitenden Temperatur im oder am oder nach Reaktor und/oder des Abzweigabgasstromes die zweite Absperr- und/oder Drosseleinrichtung den Abzweigabgasstrom im Wesentlichen sperrt oder in einem definierten Maße drosselt, während die erste Absperr- und/oder Drosseleinrichtung so geöffnet wird, dass zusätzlich oder alternativ zum Abzweigabgasstrom ein demgegenüber heißer Bypass-Abgasstrom stromauf der Abgasturbine abgezweigt und dem Reaktor zugeführt wird, wobei bevorzugt vorgesehen ist, dass ein definierter Bypass-Abgasstrom lediglich solange abgezweigt wird bis der Haupt-Abgasstrom stromab der Abgasturbine einen definierten Temperaturschwellwert erreicht oder überschreitet.

Bevorzugt ist wenigstens eine Absperr- und/oder Drosseleinrichtung im Bypass-Abgasstrom stromauf des Reaktors angeordnet. Des Weiteren ist bevorzugt vorgesehen, dass jeweils wenigstens eine Absperr- und/oder Drosseleinrichtung im Abzweigabgasstrom angeordnet ist, mittels der die Menge des abgezweigten Abzweigabgasstromes reguliert wird.

Als Absperr- und/oder Drosseleinrichtung kommen zum Beispiel Klappen, Ventile oder Schieber in Frage, die zum Beispiel elektrisch, pneumatisch oder hydraulisch angesteuert werden können.

Bevorzugt ist weiter vorgesehen, dass zur Erfassung der Temperatur an geeigneten Stellen im Abgasstrang und/oder am Reaktor Sensoren angebracht sind, die Temperatursignale zur Steuer- und/oder Regeleinrichtung 15 übermitteln, die wiederum zum Beispiel kennfeldgesteuert die jeweils vorhandenen Absperr- und/oder Drosselvorrichtungen so ansteuert, dass die jeweils gewünschten Abgasströme in der jeweils gewünschten Menge und/oder Temperatur in die gewünschte Richtung strömen. Gegebenenfalls kann auch auf den Einsatz derartiger Sensoren ganz verzichtet werden und die gesamte Ansteuerung der jeweils vorhandenen Absperr- und/oder Drosselvorrichtungen anhand mittels Referenz-Brennkraftmaschinen ermittelter Parameter rechnerisch vorgegeben werden.

Zur Verbesserung der Ammoniakfreisetzung bzw. der Reduktionsmittelzersetzung ist es möglich, den Reaktor zusätzlich zu beheizen, insbesondere elektrisch zu beheizen, und/oder ihn katalytisch zu beschichten. Als katalytisch aktive Substanzen zur Verbesserung der Reduktionsmittelzersetzung, insbesondere beim Einsatz von Harnstoff, kommen unter anderem Titanoxid und/oder Aluminiumoxid und/oder Wolframoxid und/oder Zirkonoxid und/oder kupferhaltige Zeolithe und/oder eisenhaltige Zeolithe in Frage. Zur Vergrößerung der aktiven Oberfläche bietet es sich an, den Katalysator auf metallisches oder keramisches Katalysatorsubstrat aufzubringen. Diese bilden üblicherweise parallele Strömungskanäle aus. Auch solche Substrate, zum Beispiel Sintermetallschäume, können zum Einsatz gelangen, die eine Vermischung des Reduktionsmittels über den Querschnitt ermöglichen.

Im Falle einer einzigen Abgasturbine wird der Bypass-Abgasstrom stromauf der Abgasturbine abgezweigt. Im Falle mehrerer, seriell angeordneter Abgasturbinen kann die Abzweigung des Bypass-Abgasstroms stromauf einer der Abgasturbinen erfolgen, während der Abzweigabgasstrom stromab einer der Abgasturbinen abgezweigt wird, und zwar mit der Maßgabe, dass der Abzweigabgasstrom in jedem Fall stromab des Bypass-Abgasstromes von dem Haupt-Abgasstrom abgezweigt wird.

Im Falle mehrerer Abgasturbinen kann gemäß einer weiteren Ausgestaltung vorgesehen sein, dass stromauf und stromab jeder Abgasturbine eine von der Haupt-Abgasleitung abzweigende und zur Bypassleitung geführte sowie stromauf des Reaktors und/oder stromauf einer Einmischstelle für eine Reduktionsmittelvorläufersubstanz in die Bypassleitung einmündende Abzweigleitung vorgesehen ist, wobei die mehreren Abzweigleitungen in Abhängigkeit von definierten Brennkraftmaschinen-Betriebszuständen und/oder in Abhängigkeit von definierten Reaktor-Reaktionsparametern wahlweise einzeln oder gemeinsam mittels von der Steuer- und/oder Regelvorrichtung in definiertem Maße angesteuerten Absperr- und/oder Drosseleinrichtungen abgesperrt und/oder gedrosselt und/oder geöffnet werden können.

Beträgt der Druckverlust im Hauptabgasstrom zwischen der Entnahme des Abgasabzweigstroms und der Stelle, an der aus dem Reaktor abströmende Teilabgasstrom wieder mit dem Hauptabgasstrom vereinigt wird, mehr als der Druckverlust des über den Reaktor geleiteten Teilabgasstroms, so kann auf den Verbau einer variable Drossel- oder Absperrvorrichtung im Abgasabzweig verzichtet werden. Entweder kann auf eine Drossel komplett verzichtet werden oder sie kann durch eine nichtvariable Drossel, zum Beispiel in Form einer Lochblende, ersetzt werden. Bei geöffneten Bypass strömt das Abgas auf Grund des höheren Drucks im Bypass im Vergleich zu dem Druck nach Abgasturbine in den Reaktor, ein kleiner Teil fließt zusätzlich stromab der Turbine in Richtung Hauptabgasstrom zurück und wirkt so als eine Art Waste-Gate. Wird nun die im Bypass angeordnete Drossel- oder Absperrvorrichtung aktiviert und damit der Bypassstrom verringert, dreht sich die Abgasströmung im stromab der Abgasturbine angeordneten Abzweig um und Abgas strömt nun über den Abzweigstrom in den Reaktor. Um für diese Variante ausreichend hohe Druckverluste im Hauptabgasstrom zu erreichen, sind mehrere Möglichkeiten offen: Zum einen kann der Abzweig bei mehrstufiger Aufladung zwischen zwei Abgasturbinen erfolgen, zum anderen ist eine Drosselung des Hauptabgasstrom stromauf der Rückführung für den Abgasteilstrom denkbar. Dies kann durch klassische Drosseln oder durch den Verbau von Katalysatoren, die ebenfalls einen merklichen Druckverlust aufweisen und die im System ohnehin benötigt werden, wie zum Beispiel Katalysatoren zur Oxidation von NO, geschehen.

Ist die wenigstens eine Abgasturbine mit einem Waste-Gate ausgestattet, das dem Schutz der Abgasturbine vor zu hohen Umdrehungszahlen dient, kann die Abzweigung des Bypass-Abgasstroms und/oder des Abzweigabgasstromes grundsätzlich auch innerhalb des Waste-Gates erfolgen. Bei einer mehrstufigen Aufladung können mehrere Turbinen mit einem Waste-Gate ausgestattet werden, die Entnahme kann dabei an einem oder an mehreren der Waste-Gates erfolgen.

Des Weiteren kann der erfindungsgemäße Aufbau mit Vorrichtungen zur Erhöhung der Bremsleistung des Motors im Bremsbetrieb, insbesondere mit Motorstau- oder Motorbremsklappen, die im Abgastrakt angebracht sind, kombiniert werden. Die Entnahme für den zum Reaktor geleiteten Bypass-Abgasstrom kann stromauf der Motorstau- oder Motorbremsklappe, die Rückführung stromab der Klappe erfolgen. Je nach Entnahme- oder Rückführposition können somit die erfindungsgemäßen Drossel- und/oder Absperreinrichtungen im Bypass-Abgasstrom bzw. Hauptabgasstrom eingespart oder der Abgasgegendruck und damit die Bremsleistung über die im Bypass-Abgasstrom angebrachten Absperr- und/oder Drosseleinrichtungen gesteuert oder geregelt werden.

Gemäß einer weiteren bevorzugten Ausgestaltung ist vorgesehen, dass eine Abgassteuereinrichtung, zum Beispiel eine Abgasstauklappe oder dergleichen, stromauf einer Abgasturbine bzw. einer ersten Abgasturbine einer Abgasturboladeranordnung angebracht ist. Zusätzlich kann hier ein parallel zu dieser Abgassteuereinrichtung angeordneter Schusskanal vorgesehen sein, über den Abgas unter hohem Druck und mit hoher Geschwindigkeit auf das Laufrad der Turbine geleitet und damit diese angetrieben wird. Über den mit der Turbine verbundenen Verdichter wird dem Motor mehr Frischluft zugeführt, wodurch die Zylinderfüllung und damit die Abgasmenge angehoben werden. Die Entnahme für den zum Reaktor geleiteten Bypass-Abgasstrom erfolgt bevorzugt stromauf dieser Abgassteuereinrichtung.

Bezüglich der erfindungsgemäßen Vorrichtung ergeben sich die gleichen Vorteile, wie sie bereits zuvor in Verbindung mit der Ausgestaltung der Verfahrensführung näher erläutert worden sind. Insofern wird bezüglich dieser Vorteile auf die zuvor gemachten Ausführungen verwiesen.

Die Erfindung wird nachfolgend anhand einer Zeichnung erläutert.
- Fig. 1: eine schematische Darstellung einer ersten erfindungsgemäßen Verfahrensführung und Vorrichtung zum Reinigen eines Abgas- stroms einer einstufig aufgeladenen Brennkraftmaschine,
- Fig. 2: schematisch eine Verfahrensführung und eine Vorrichtung mit einer zweistufigen Aufladung der Brennkraftmaschine,
- Fig. 3: schematisch eine Verfahrensführung und eine Vorrichtung mit einer zweistufigen Aufladung der Brennkraftmaschine, bei der Abgasströme stromauf und stromab sämtlicher Abgasturbinen entnommen werden können,
- Fig. 4: eine schematische Darstellung einer Verfahrensführung und Vor- richtung zur Reinigung eines Abgasstroms einer zweistufig aufge- ladenen Brennkraftmaschine mit einer Bypass-Abgasstroment- nahme innerhalb eines Waste-Gates und nur einer variablen Drossel- oder Absperrvorrichtung, die im Bypass angeordnet ist,
- Fig. 5: schematisch eine Verfahrensführung und eine Vorrichtung zur Reinigung eines Abgasstroms einer einstufig aufgeladenen Brennkraftmaschine mit einer Entnahme des Bypass-Abgasstroms stromauf einer stromauf einer Abgasturbine angebrachten Abgas- bremsklappe mit parallel angeordnetem Schusskanal und
- Fig. 6: eine schematische Darstellung einer Verfahrensführung und Vor- richtung zur Reinigung eines Abgasstroms einer zweistufig aufgeladenen Brennkraftmaschine mit einer Bypass-Abgas- stromentnahme innerhalb eines Waste-Gates und Motorstau- bzw. Bremsklappe.

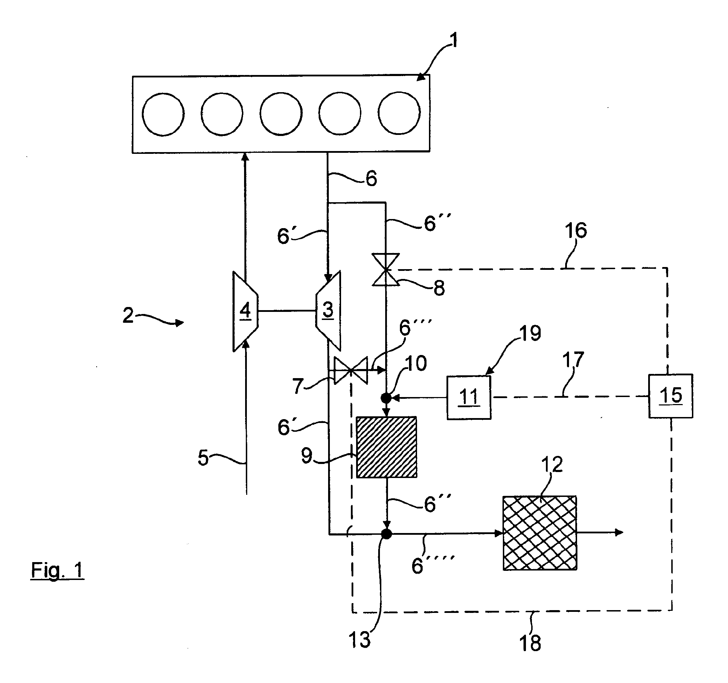

In der Fig. 1 ist schematisch eine erste Ausführungsform einer erfindungsgemäßen Verfahrensführung und einer erfindungsgemäßen Vorrichtung zur Reinigung eines Abgasstroms einer mittels eines Abgasturboladers 2 einstufig aufgeladenen Brennkraftmaschine 1 gezeigt. Der Abgasturbolader 2 weist eine Abgasturbine 3 und einen Verdichter 4 auf. Mittels des Verdichters 4 erfolgt eine Aufladung der Ladeluft 5, wobei der Verdichter 4 mittels der Abgasturbine 3 angetrieben wird.

Stromauf der Abgasturbine 3 zweigt sich ein von der Brennkraftmaschine 1 kommender Abgasstrom 6 in einen in einer Haupt-Abgasleitung geführten Haupt-Abgasstrom 6' und in einen in einer Bypassleitung geführten Bypass-Abgasstrom 6" auf. Stromab der Abgasturbine 3 kann von dem Haupt-Abgasstrom 6' mittels einer von der Haupt-Abgasleitung abzweigenden Abzweigleitung ein Abzweigabgasstrom 6"' abgezweigt und stromauf eines Reaktors 9 sowie stromauf einer Zumess- bzw. Einmischstelle 10 des Bypass-Abgasstroms 6" der Bypassleitung bzw., je nach den gerade vorgegebenen Betriebsparametern, einem Bypass-Abgasstrom 6" zugeführt werden. In der Abzweigleitung bzw. dem Abzweigabgasstrom 6"' ist eine zum Beispiel variable Drosseleinrichtung 7 angeordnet.

Im Bypass-Abgasstrom 6" ist in Strömungsrichtung gesehen eine weitere variable Drosseleinrichtung 8 angeordnet. Stromab dieser variablen Drosseleinrichtung 8 ist im Bypass-Abgasstrom 6" der Reaktor 9 angeordnet. Stromauf des Reaktors 9 ist die Zumessstelle 10 für eine Ammoniakvorläufersubstanz als zu zersetzendes Reduktionsmittel 11 vorgesehen. Stromab des Reaktors 9 mündet der Bypass-Abgasstrom 6" stromab der Abzweigstelle der Abzweigleitung 6"' wieder in den Haupt-Abgasstrom 6' ein, so dass diese beiden Abgasströme dann zusammen als ammoniakhaltiger Abgasstrom 6"", wie dies nachfolgend noch näher beschrieben wird, einem SCR-Katalysator 12 zugeführt wird.

Ferner ist in der Fig. 1 noch eine Steuer- und/oder Regeleinrichtung 15 dargestellt, die über hier strichliert dargestellte Signalleitungen 16, 17 und 18 signaltechnisch mit den beiden Drosseleinrichtungen 7, 8 bzw. mit einer das Reduktionsmittel 11 aufweisenden Zumesseinrichtung 19 gekoppelt ist.

Die grundsätzliche Funktionsweise dieser Erfindungsvariante ist dergestalt, dass bei definierten Betriebszuständen durch entsprechende Ansteuerung der variablen Drosseleinrichtung 7 und/oder der variablen Drosseleinrichtung 8 in noch zu beschreibender Weise eine definierte Abgasmenge als Bypass-Abgasstrom 6" und/oder als Abzweigabgasstrom 6"' vom Abgasstrom 6 abgezweigt und dem Reaktor 9 zugeführt werden kann. Dieser Bypass-Abgasstrom 6" und/oder Abzweigabgasstrom 6"' wird stromauf des Reaktors 9, mittels der Steuer- und/oder der Regeleinrichtung 15, entsprechend definierter Betriebsparameter der Brennkraftmaschine und/oder definierter Reaktionsparameter des Reaktors 9, mit einer definierten Menge eines zu zersetzenden Reduktionsmittels 11 beaufschlagt, das im Reaktor 9 zusammen mit dem heißen Abgas des heißen Bypass-Abgasstroms 6" und/oder des Abzweigabgasstroms 6"' Ammoniak erzeugt, das dann mittels des Bypass-Abgasstroms 6" an der Einmündstelle 13 dem Abgasstrom 6'zugeführt wird, so dass dieser als ammoniakhaltiger Abgasstrom 6"" zum SCR-Katalysator 12 strömt.

Sinkt nunmehr beispielsweise die Temperatur im Haupt-Abgasstrom 6' stromab der Abgasturbine 3 soweit ab, dass damit keine vernünftige zum Beispiel Ammoniakfreisetzung im Reaktor 9 mehr möglich ist, wird die Abzweigung bzw. Entnahme eines Abzweigabgasstromes 6"' stromab der Abgasturbine 3 gedrosselt und die Abzweigung bzw. Entnahme stromauf der Abgasturbine 3 entdrosselt bzw. geöffnet, das heißt, dass ein heißer Bypass-Abgasstrom 6" zum Reaktor 9 strömt. Auf Grund der höheren Abgastemperaturen stromauf der Abgasturbine 3 und damit des Bypass-Abgasstromes 6" steigt die Temperatur im Reaktor 9 an und eine zum Beispiel Ammoniak-Freisetzung wird möglich.

Steigt die Temperatur des Haupt-Abgasstromes 6' stromab der Abgasturbine 3 dann wieder auf ein Niveau, das eine gewünschte Reduktionsmittelzersetzung im Reaktor 9 sicherstellt, wird die Abgasmenge, die stromauf der Abgasturbine 3 als Bypass-Abgasstrom 6" abgezweigt bzw. entnommen wird, verringert und die Abgasmenge des Abzweigabgasstromes 6"', der stromab der Abgasturbine 3 entnommen wird, erhöht.

Dadurch wird sichergestellt, dass zum einen für die Ammoniakfreisetzung im Leerlauf- und/oder Schwachlastbetrieb durch die Entnahme des Bypass-Abgasstroms 6" stromauf der Abgasturbine 3 hohe Temperaturen zur Verfügung gestellt werden können und zum anderen der Wirkungsgrad der Brennkraftmaschine 1 nicht unnötig verschlechtert wird, indem bei hohen Abgastemperaturen das Abgas stromab der Abgasturbine 3 und nicht mehr stromauf der Abgasturbine 3 entnommen wird.

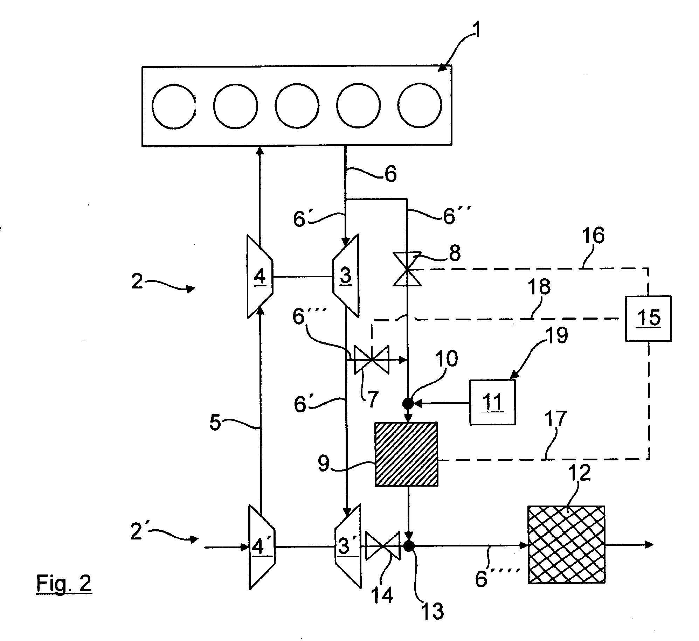

Sowohl bei diesem Ausführungsbeispiel nach Fig. 1 als auch bei sämtlichen nachfolgenden Ausführungsbeispielen gemäß der Fig. 2 bis 6 sind zur Erfassung der Temperatur an geeigneten Stellen im Abgasstrang und/oder am Reaktor hier nicht dargestellte Sensoren angebracht, die die Temperatursignale zur Steuer- und/oder Regeleinrichtung 15 übermitteln, die wiederum zum Beispiel kennfeldgesteuert die jeweils vorhandenen Absperr- und/oder Drosselvorrichtungen so ansteuert, dass die jeweils gewünschten Abgasströme in der jeweils gewünschten Menge und/oder Temperatur in die gewünschte Richtung strömen.

In der Fig. 2 ist eine alternative Ausführungsform gezeigt, bei der im Unterschied zur Ausführungsform nach Fig. 1 eine zweistufige Aufladung mittels eines zusätzlichen Abgasturboladers 2' erfolgt, der eine Abgasturbine 3' und einen Verdichter 4' aufweist. Bevorzugt ist hier die in Strömungsrichtung gesehen vordere, erste Abgasturbine 3 als Hochdruckturbine ausgelegt, während die stromab gelegene zweite Abgasturbine 3' als Niederdruckturbine ausgelegt ist.

In der Fig. 2 ist weiter lediglich äußerst schematisch dargestellt, dass der das ammoniakhaltige Reduktionsmittel aufweisende Bypass-Abgasstrom 6" dem Haupt-Abgasstrom 6' stromab einer Motorstau- oder Motorbremsklappe 14, die der Anhebung des Schleppmoments im Bremsbetrieb dient, zurückgeführt wird. Diese Maßnahme ist grundsätzlich bei allen hier gezeigten Ausführungsformen möglich, aber aus Übersichtlichkeitsgründen dort nicht mehr explizit dargestellt.

Ansonsten entspricht der Aufbau und die Verfahrensführung dem- bzw. derjenigen der Ausführungsform gemäß Fig. 1, so dass insofern auf die zuvor in Verbindung mit der Fig. 1 Ausführungen verwiesen wird.

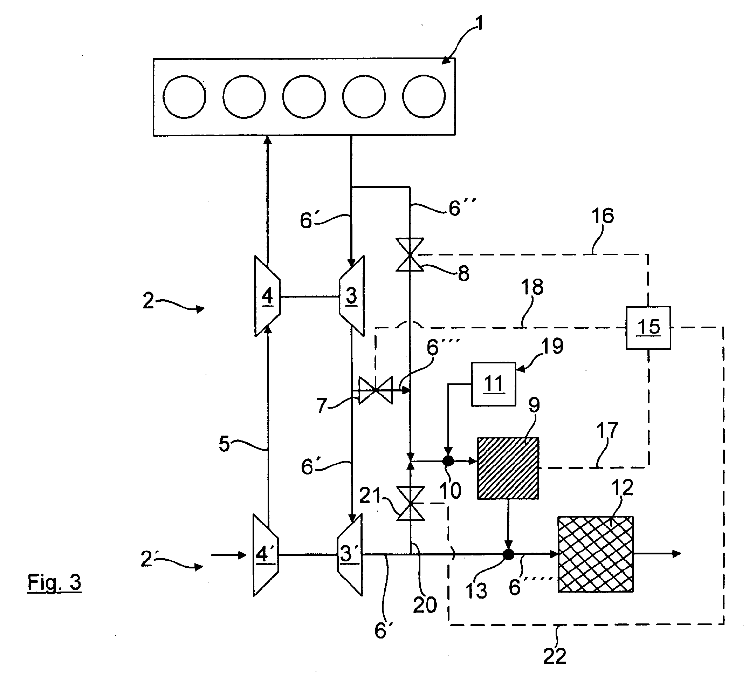

In der Fig. 3 ist eine im Wesentlichen der Fig. 2 entsprechende alternative Ausführungsform gezeigt, bei der im Unterschied zur Ausgestaltung nach Fig. 2 eine zweite, stromab der Abgasturbine 3' abzweigende Abgasleitung vorgesehen ist, in der eine bevorzugt variable Drosseleinrichtung 21 angeordnet ist, die über eine Signalleitung 22 mit der Steuer- und/oder Regeleinrichtung 15 verbunden ist. Mit einem derartigen Aufbau werden die Variationsmöglichkeiten wesentlich erhöht, da der dem Reaktor 9 zugeführte Abzweigabgasstrom 6"' bzw. 20, schwellwertabhängig bzw. je nach den gerade vorherrschenden Betriebs- und/oder Reaktionsparametern, stromauf und/oder stromab der Abgasturbine 3' abgezogen werden kann. Vom Reaktor 9 ausgehend kann dann der mit Ammoniak beladene Abgasstrom an der Einmischstelle 13 wieder dem Abgasstrom 6'zugeführt und als Abgasstrom 6"" dem SCR-Katalysator 12 zugeführt werden.

Beispielsweise kann hier die Drosseleinrichtung 21 geschlossen werden, so dass sich eine Verfahrensführung ergibt, die derjenigen der Fig. 2 entspricht. Wird die Drosseleinrichtung 21 dagegen geöffnet und werden zum Beispiel die Drosseleinrichtungen 7 und 8 geschlossen, strömt einzig der Abzweigabgasstrom 20 über den Reaktor 9. Die eben beschriebenen Verfahrensführungsmöglichkeiten sind nur Beispiele. Selbstverständlich sind je nach der jeweiligen Ansteuerung der Drosseleinrichtungen 7, 8 und 21 auch andere Verfahrensführungen möglich, insbesondere auch Mischungen unterschiedlich heißer Abgasströme.

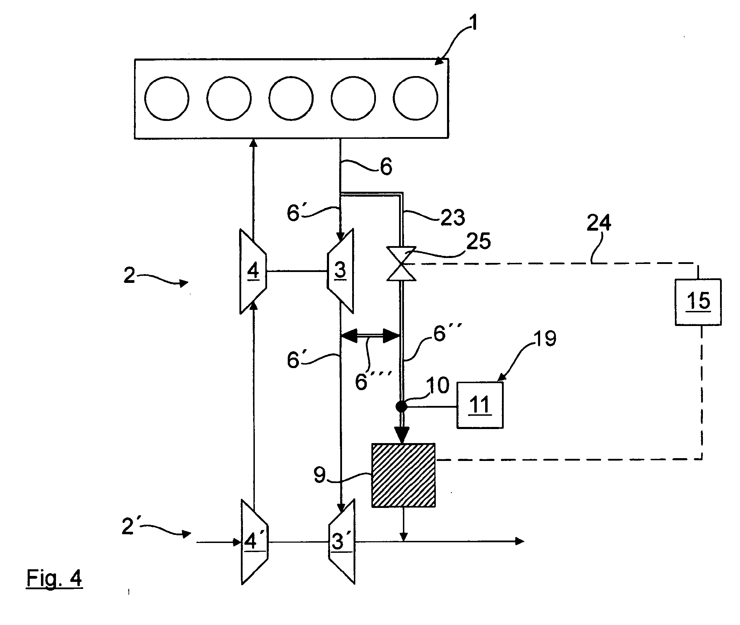

In der Fig. 4 ist eine weitere alternative Ausführungsform gezeigt, bei der ebenfalls wiederum eine zweistufige Aufladung der Brennkraftmaschine im Sinne der Fig. 2 erfolgt. Im Unterschied zur Ausgestaltung gemäß Fig. 2 erfolgt hier die Abzweigung des Bypass-Abgasstroms 6" aus einer Waste-Gate-Leitung 23, in der eine variable Drosseleinrichtung 25 angeordnet ist, die mit einer Signalleitung 24 mit der Steuer- und/oder Regeleinrichtung 15 signaltechnisch gekoppelt wird.

Bei einer Ansteuerung der variablen Drosseleinrichtung 25 mittels der Steuer-und/oder Regeleinrichtung 15 kann über die Waste-Gate-Leitung 23 ein Bypass zur Abgasturbine 3 geöffnet werden. In diesem Fall strömt ein Bypass-Abgasstrom 6" direkt aus dem Bypass in den Reaktor 9. Da im Abgasabzweig keine variable Drosseleinrichtung verbaut ist, strömt ein kleiner Teil über den Abgasabzweig 6"' in Richtung Hauptabgasstrom 6'. Wird dagegen die Drosseleinrichtung 25 aktiviert, verringert sich der Bypass-Abgasstrom 6", die Strömungsrichtung im Abgasabzweig 6"' dreht sich um, so dass nun über diesen Abgas in den Reaktor 9 strömt. Ferner könnte eine derartige Waste-Gate-Abzweigung grundsätzlich auch bei einer Ausführungsform gemäß Fig. 3 vorgesehen sein.

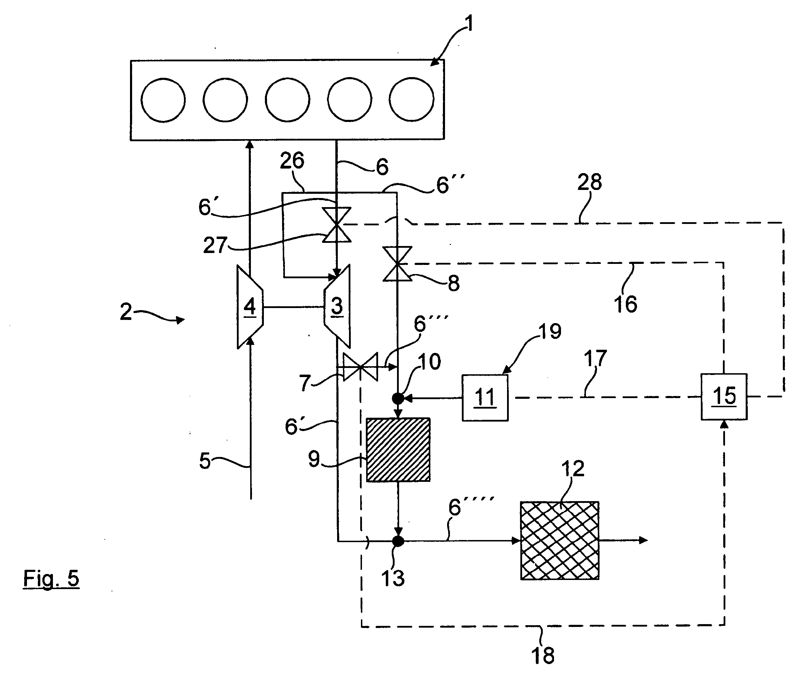

In der Fig. 5 ist schließlich eine Ausgestaltung gezeigt, bei der die Brennkraftmaschine 1 im Sinne der Ausgestaltung nach der Fig. 1 einstufig mittels des Abgasturboladers 2 aufgeladen wird. Im Unterschied zur Ausführungsform nach Fig. 1 ist hier weiter eine zum Beispiel durch eine Motor- bzw. Abgasbremsklappe gebildete variable Drosseleinrichtung 27 stromauf der Abgasturbine 3 angeordnet und erfolgt eine Abzweigung des Bypass-Abgasstroms 6" stromauf dieser variablen Drosseleinrichtung 27. Die Drosseleinrichtung 27 ist wiederum mittels einer Signalleitung 28 mit der Steuer- und/oder Regeleinrichtung 15 signaltechnisch gekoppelt.

Im weiteren Unterschied zur Ausgestaltung nach Fig. 1 ist hier ferner noch ein stromauf der variablen Drosseleinrichtung 27 abgezweigter Schusskanal vorgesehen, mittels dem, insbesondere bei geschlossener Drosseleinrichtung 27, ein Abgasstrom 26 unter hohem Druck und mit hoher Geschwindigkeit auf das Laufrad der Abgasturbine 3 geleitet und diese damit angetrieben werden kann. Dadurch wird der Brennkraftmaschine 1 über den mit der Abgasturbine 3 verbundenen Verdichter 4 mehr Ladeluft 5 zugeführt als dies bei vergleichbaren Betriebszuständen gemäß der Ausführungsform nach Fig. 1 der Fall ist, wodurch die Zylinderfüllung der Brennkraftmaschine 1 und damit deren Abgasmenge und im Motorbremsbetrieb deren Bremsleistung angehoben wird.

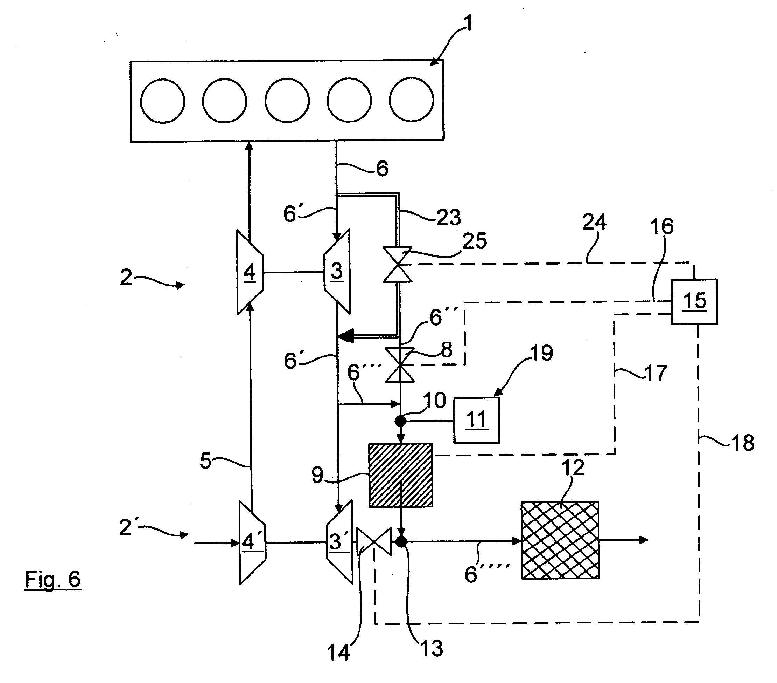

In Fig. 6 ist eine zur Fig. 4 ähnliche Vorrichtung, allerdings in Kombination mit einer Motorstau- oder Motorbremsklappe 14 dargestellt. Hierbei kann bei aktivierter Motorstau- oder Motorbremsklappe 14 die Bremsleistung von der Steuer- und/oder Regeleinrichtung 15 mit Hilfe der variablen Drosseleinrichtung 8 verändert bzw. geregelt werden. Ansonsten entspricht die Funktionsweise derjenigen, wie sie zum Beispiel zuvor insbesondere in Verbindung mit den Ausführungsformen der Fig. 1, 2 und 4 bereits näher erläutert worden ist. Lediglich ergänzend hierzu sei nochmals eine Verfahrensführung beschrieben, bei der zum Beispiel bei gedrosselter Motorstau- oder Motorbremsklappe 14 und geschlossener Drosseleinrichtung 8 ein Abzweigabgasstrom 6"' in Richtung Reaktor 9 strömt. Die zum Beispiel Temperatur dieses Abzweigabgasstroms 6"' kann dann über die Ansteuerung der Drosseleinrichtung 25 eingestellt werden. Wie bereits geschildert, sind auch noch andere Verfahrensführungen jederzeit möglich.

## Patentansprüche

1. Verfahren zur Reinigung eines Abgasstroms einer abgasaufgeladenen Brennkraftmaschine, bei dem Stickoxide aus dem Abgasstrom mittels der selektiven katalytischen Reduktion (SCR) entfernt werden, wobei der Abgasstrom (6) stromauf einer Abgasturbine eines Abgasturboladers und stromauf wenigstens eines SCR-Katalysators (12) in einen in einer Hauptabgasleitung zur Abgasturbine (3; 3') geführten Haupt-Abgasstrom (6') und in wenigstens einen in einer Bypassleitung geführten und an der Abgasturbine vorbeigeführten Bypass-Abgasstrom (6"), der bevorzugt von dem Haupt-Abgasstrom abgezweigt wird, aufgeteilt ist bzw. aufgezweigt wird, wobei dem Bypass-Abgasstrom (6") in definierten Brennkraftmaschinen-Betriebszuständen eine definierte Menge einer zu zersetzenden Reduktionsmittelvorläufersubstanz (11) zugeführt wird, die in einem Reaktor (9), der strömungstechnisch mit dem Bypass-Abgasstroms (6") verbunden ist, zu einem Reduktionsmittel, bevorzugt zu Ammoniak, umgesetzt wird, das mittels des Bypass-Abgasstroms (6") vom Reaktor (9) abgeführt und stromauf des SCR-Katalysators (12) dem Haupt-Abgasstrom (6') zugeführt wird, und
wobei wenigstens eine mittels einer Steuer- und/oder Regelvorrichtung gekoppelte und in Abhängigkeit von definierten Betriebsparametern ansteuerbare Absperr- und/oder Drosseleinrichtung (7, 8; 21; 25; 27) vorgesehen ist,
**dadurch gekennzeichnet,**
**dass** von der Hauptabgasleitung stromab der Abgasturbine (3; 3') wenigstens eine Abzweigleitung abgezweigt ist, die stromauf des Reaktors (9) und/oder stromauf einer Einmischstelle (10) für eine Reduktionsmittelvorläufersubstanz (11) in die Bypassleitung einmündet und mittels der ein Abzweigabgasstrom (6"', 20) in Abhängigkeit von definierten Brennkraftmaschinen-Betriebszuständen, insbesondere außerhalb eines definierten Leerlauf- und/oder Schwachlastbetriebes der Brennkraftmaschine (1), und/oder in Abhängigkeit von definierten Schwellwerten, insbesondere in Abhängigkeit von definierten Temperatur- und/oder Abgasmassen-Schwellwerten am oder im oder nach Reaktor und/oder der Abgasströme vor und/oder hinter der Abgasturbine (3; 3'), alternativ oder gegebenenfalls zusätzlich zum Bypass-Abgasstrom (6") sowie gesteuert oder geregelt über die die wenigstens eine Absperr- und/oder Drosselvorrichtung (7, 8; 21; 25; 27) ansteuernde Steuer- und/oder Regelvorrichtung (15) von dem Hauptabgasstrom (6') abgezweigt und der Bypassleitung zugeführt wird.

2. Verfahren nach Anspruch 1, **dadurch gekennzeichnet, dass**, im Falle einer, einen definierten Temperaturschwellwert überschreitenden Temperatur am oder im oder nach Reaktor (9) und/oder des Bypass-Abgasstroms (6") und/oder im Falle eines, einen definierten Temperaturschwellwert erreichenden Haupt-Abgasstroms (6') stromab der Abgasturbine (3) und/oder bei Überschreiten eines, einen definierten Abgasstromschwellwert erreichenden Abgasstroms vor und/oder hinter der Abgasturbine (3; 3'), wenigstens eine die Menge des abgezweigten Bypass-Abgasstromes (6") regulierende, vorzugsweise in einer Waste-Gate-Leitung und/oder in der Bypassleitung angeordnete, Absperr- und/oder Drosseleinrichtung (8; 25) so angesteuert wird, dass diese die Abzweigung des heißen Bypass-Abgasstromes (6") stromauf der Abgasturbine (3) im Wesentlichen sperrt oder in einem definierten Umfang drosselt, so dass ein definierter, stromab der Abgasturbine vom Haupt-Abgasstrom (6') abgezweigter Abzweigabgasstrom (6"', 20) zur Bypassleitung strömt, wobei bevorzugt vorgesehen ist, dass dieser Abzweigabgasstrom (6"', 20) solange abgezweigt wird und/oder zur Bypassleitung strömt, bis die Temperatur dieses Abzweigabgasstroms (6"', 20) und/oder die Temperatur am oder im oder nach Reaktor (9) einen definierten Temperaturschwellwert und/oder der Abgasstrom vor und/oder hinter der Abgasturbine (3; 3') einen definierten Abgasstromschwellwert unterschreitet, und
dass bei einer einen definierten Temperaturschwellwert unterschreitenden Temperatur im oder am oder nach Reaktor (9) und/oder des Abzweigabgasstromes (6"', 20) und/oder bei Überschreiten eines, einen definierten Abgasstromschwellwert erreichenden Abgasstroms vor und/oder hinter der Abgasturbine (3; 3') die Absperr- und/oder Drosseleinrichtung (8; 25) so geöffnet wird, dass zusätzlich oder alternativ zum Abzweigabgasstrom (6"', 20) ein demgegenüber heißer Bypass-Abgasstrom (6") stromauf der Abgasturbine (3) abgezweigt und dem Reaktor (9) zugeführt wird, wobei bevorzugt vorgesehen ist, dass ein definierter Bypass-Abgasstrom (6") lediglich solange abgezweigt wird bis der Haupt-Abgasstrom (6') stromab der Abgasturbine (3) einen definierten Temperaturschwellwert und/oder der Abgasstrom vor und/oder hinter der Abgasturbine (3; 3') einen definierten Abgasstromschwellwert erreicht oder überschreitet.

3. Verfahren nach Anspruch 1 oder 2, **dadurch gekennzeichnet, dass**, im Falle einer, einen definierten Temperaturschwellwert überschreitenden Temperatur am oder im oder nach Reaktor (9) und/oder des Bypass-Abgasstroms (6") und/oder im Falle eines einen definierten Temperaturschwellwert erreichenden Haupt-Abgasstroms (6') stromab der Abgasturbine (3) und/oder bei Überschreiten eines, einen definierten Abgasstromschwellwert erreichenden Abgasstroms vor und/oder hinter der Abgasturbine (3; 3'), eine die Menge des abgezweigten Bypass-Abgasstromes (6") regulierende, vorzugsweise in der Bypassleitung angeordnete, erste Absperr- und/oder Drosseleinrichtung (8; 25) so angesteuert wird, dass diese die Abzweigung des heißen Bypass-Abgasstromes (6") stromauf der Abgasturbine (3) im Wesentlichen sperrt oder in einem definierten Umfang drosselt, während stromab der Abgasturbine (3) angeordnete und die Menge des Abzweigabgasstroms (6'", 20) regulierende, vorzugsweise in der Abzweigleitung angeordnete zweite Absperr- und/oder Drosseleinrichtung (7; 21) so angesteuert wird, dass ein definierter Abzweigabgasstrom (6"', 20) zur Bypassleitung strömt, wobei bevorzugt vorgesehen ist, dass dieser Abzweigabgasstrom (6"', 20) solange zur Bypassleitung strömt bis die Temperatur dieses Abzweigabgasstroms (6"', 20) und/oder die Temperatur am oder im oder nach Reaktor (9) einen definierten Temperaturschwellwert und/oder der Abgasstrom stromauf oder stromab der Abgasturbine einen definierten Abgasstromschwellwert unterschreitet, und
dass bei einer einen definierten Temperaturschwellwert unterschreitenden Temperatur im oder am oder nach Reaktor (9) und/oder des Abzweigabgasstromes (6"', 20) und/oder bei Unterschreiten eines, einen definierten Abgasstromschwellwert erreichenden Abgasstroms vor und/oder hinter der Abgasturbine (3; 3') die zweite Absperr- und/oder Drosseleinrichtung (7; 21) den Abzweigabgasstrom (6"', 20) im Wesentlichen sperrt oder in einem definierten Maße drosselt, während die erste Absperr- und/oder Drosseleinrichtung (8; 25) so geöffnet wird, dass zusätzlich oder alternativ zum Abzweigabgasstrom (6"', 20) ein demgegenüber heißer Bypass-Abgasstrom (6") stromauf der Abgasturbine (3) abgezweigt und dem Reaktor (9) zugeführt wird, wobei bevorzugt vorgesehen ist, dass ein definierter Bypass-Abgasstrom (6") lediglich solange abgezweigt wird bis der Haupt-Abgasstrom (6') stromab der Abgasturbine (3) einen definierten Temperaturschwellwert und/oder Abgasstromschwellwert erreicht oder überschreitet.

4. Verfahren nach einem der Ansprüche 1 bis 3, **dadurch gekennzeichnet, dass** im Hauptabgasstrom (6') mehrere Abgasturbinen (3; 3') angeordnet sind und der Bypass-Abgasstrom (6") stromauf einer der Abgasturbinen (3) und der Abzweigabgasstrom (6"', 20) stromab einer der Abgasturbinen (3,3') abgezweigt wird, wobei der Abzweigabgasstrom (6"', 20) in jedem Fall stromab des Bypass-Abgasstromes (6") von dem Haupt-Abgasstrom (6') abgezweigt wird, wobei bevorzugt vorgesehen ist, dass stromauf und stromab jeder Abgasturbine (3; 3') eine von der Haupt-Abgasleitung abzweigende und zur Bypassleitung geführte sowie stromauf des Reaktors (9) und/oder stromauf einer Einmischstelle (10) für eine Reduktionsmittelvorläufersubstanz in die Bypassleitung einmündende Abzweigleitung vorgesehen ist, wobei die mehreren Abzweigleitungen in Abhängigkeit von definierten Brennkraftmaschinen-Betriebszuständen und/oder in Abhängigkeit von definierten Schwellwerten wahlweise einzeln oder gemeinsam mittels wenigstens einer von der Steuer- und/oder Regelvorrichtung (15) in definiertem Maße angesteuerten Absperr- und/oder Drosseleinrichtung absperrbar und/oder drosselbar und/oder öffenbar sind.

5. Verfahren nach einem der vorhergehenden Ansprüche, **dadurch gekennzeichnet, dass** im Falle einer einstufigen Aufladung mit einer Abgasturbine (3) der Bypass-Abgasstrom (6") von einer Waste-Gate-Anordnung (23) der Abgasturbine (3) abgezweigt wird oder dass im Falle einer mehrstufigen Aufladung mit mehreren Abgasturbinen (3, 3') der Bypass-Abgasstrom (6") und/oder der wenigstens eine Abzweigabgasstrom (6"', 20) von einer Waste-Gate-Anordnung einer entsprechend zugeordneten Abgasturbine abgezweigt wird.

6. Verfahren nach einem der vorhergehenden Ansprüche, **dadurch gekennzeichnet, dass** eine Motorstau- und/oder Motorbremsklappe (27) stromauf einer Abgasturbine (3) angeordnet ist, und
dass ein parallel zu dieser Motorstau- und/oder Motorbremsklappe (27) angeordneter Schusskanal vorgesehen ist, über den Abgas (26), insbesondere im Motorbremsbetrieb, mit definiertem Druck und/oder Geschwindigkeit auf das Laufrad einer Abgasturbine (3) geleitet wird.

7. Verfahren nach einem der vorhergehenden Ansprüche, **dadurch gekennzeichnet, dass** der das ammoniakhaltige Reduktionsmittel aufweisende Bypass-Abgasstrom (6") dem Haupt-Abgasstrom (6') stromab einer Motorstau- oder Motorbremsklappe (14), die vorzugsweise als Absperr- und/oder Drosseleinrichtung verwendet wird und/oder die der Anhebung des Schleppmoments im Bremsbetrieb dient, zurückgeführt wird, und/oder dass eine Motorstau- oder Motorbremsklappe (27), die vorzugsweise als Absperr- und/oder Drosseleinrichtung verwendet wird, stromauf einer Abgasturbine (3) angeordnet ist und der Bypass-Abgasstrom (6") wenigstens zum Teil stromauf dieser Motorstau- oder Motorbremsklappe (27) entnommen wird.

8. Verfahren nach einem der vorhergehenden Ansprüche, **dadurch gekennzeichnet, dass** der Reaktor (9) einen Katalysator oder eine Katalysatorbeschichtung aufweist, die die Zersetzung der Reduktionsmittelvorläufersubstanz (11), insbesondere einer Ammoniakvorläufersubstanz, begünstigt, wobei bevorzugt weiter vorgesehen ist, dass der reaktörseitige Katalysator oder die reaktorseitige Katalysatorbeschichtung zur Zersetzung der Reduktionsmittelvorläufersubstanz zugleich eine NO_{X}-Reduktionsaktivität aufweist, wobei bevorzugt vorgesehen ist, dass als Reduktionsmittelvorläufersubstanz (11) Harnstoff und/oder eine Harnstoff-Wasserlösung und/oder Guanidin und/oder Guanidinsalze, insbesondere Guanidinformiat und/oder Ammoniumformiat und/oder Ammoniumcarbamat verwendet wird.

9. Vorrichtung zur Reinigung eines Abgasstroms einer abgasaufgeladenen Brennkraftmaschine mittels der selektiven katalytischen Reduktion (SCR), insbesondere zur Durchführung eines Verfahrens nach einem der vorstehenden Verfahrensansprüche, mit einem Abgasstrom (6), der stromauf einer Abgasturbine eines Abgasturboladers und stromauf wenigstens eines SCR-Katalysators (12) in einen in einer Hauptabgasleitung zur Abgasturbine geführten Haupt-Abgasstrom (6') und in wenigstens einen in einer Bypassleitung geführten Bypass-Abgasstrom (6"), der an der Abgasturbine vorbeiführbar ist, aufgeteilt bzw. aufzweigbar ist, wobei dem Bypass-Abgasstrom (6") in definierten Brennkraftmaschinen-Betriebszuständen eine definierte Menge einer zu zersetzenden Reduktionsmittelvorläufersubstanz (11) zuführbar ist, die in einem Reaktor (9), der strömungstechnisch mit dem Bypass-Abgasstrom (6") verbunden ist, zu einem Reduktionsmittel, bevorzugt zu Ammoniak, umgesetzt wird, das mittels des Bypass-Abgasstroms (6") vom Reaktor (9) abführbar und stromauf des SCR-Katalysators (12) dem Haupt-Abgasstrom (6') zuführbar ist, und
wobei wenigstens eine mittels einer Steuer- und/oder Regelvorrichtung gekoppelte und in Abhängigkeit von definierten Betriebsparametern ansteuerbare Absperr- und/oder Drosseleinrichtung (7, 8; 21; 25; 27) vorgesehen ist,
**dadurch gekennzeichnet,**
**dass** von der Hauptabgasleitung stromab der Abgasturbine (3; 3') wenigstens eine Abzweigleitung abgezweigt ist, die stromauf des Reaktors (9) und/oder stromauf einer Einmischstelle (10) für eine Reduktionsmittelvorläufersubstanz (11) in die Bypassleitung einmündet und mittels der ein Abzweigabgasstrom (6"', 20) in Abhängigkeit von definierten Brennkraftmaschinen-Betriebszuständen, insbesondere außerhalb eines definierten Leerlauf- und/oder Schwachlastbetriebes der Brennkraftmaschine (1), und/oder in Abhängigkeit von definierten Schwellwerten, insbesondere in Abhängigkeit von definierten Temperatur- und/oder Abgasmassen-Schwellwerten am oder im oder nach Reaktor und/oder der Abgasströme vor und/oder hinter der Abgasturbine (3; 3'), alternativ oder zusätzlich zum Bypass-Abgasstrom (6") sowie gesteuert oder geregelt über die die wenigstens eine Absperr- und/oder Drosselvorrichtung (7, 8; 21; 25; 27) ansteuernde Steuer- und/oder Regelvorrichtung (15) von dem Hauptabgasstrom (6') abzweigbar und der Bypassleitung zuführbar ist.

10. Vorrichtung nach Anspruch 9, **dadurch gekennzeichnet, dass** in der Haupt-Abgasleitung mehrere Abgasturbinen (3; 3') angeordnet sind und die Bypassleitung stromauf einer der Abgasturbinen (3) und die wenigstens eine Abzweigleitung stromab einer der Abgasturbinen (3, 3') abgezweigt ist, wobei die Abzweigleitung in jedem Fall stromab der Bypassleitung von der Haupt-Abgasleitung abgezweigt ist, wobei bevorzugt vorgesehen ist, dass stromauf und stromab jeder Abgasturbine (3, 3') eine von der Haupt-Abgasleitung abzweigende und zur Bypassleitung geführte sowie stromauf des Reaktors (9) und/oder stromauf einer Einmischstelle (10) für eine Reduktionsmittelvorläufersubstanz (11) in die Bypassleitung einmündende Abzweigleitung vorgesehen ist, wobei die mehreren Abzweigleitungen in Abhängigkeit von definierten Brennkraftmaschinen-Betriebszuständen und/oder in Abhängigkeit von definierten Reaktor-Reaktionsparametern wahlweise einzeln oder gemeinsam mittels von der Steuer- und/oder Regelvorrichtung in definiertem Maße ansteuerbaren Absperr- und/oder Drosseleinrichtungen absperrbar und/oder drosselbar und/oder öffenbar sind.

11. Vorrichtung nach Anspruch 9 oder 10, **dadurch gekennzeichnet, dass** im Falle einer einstufigen Aufladung mit einer Abgasturbine (3) der Bypass-Abgasstrom (6") von einer Waste-Gate-Anordnung (26) der Abgasturbine (3) abgezweigt ist oder dass im Falle einer mehrstufigen Aufladung mit mehreren Abgasturbinen (3, 3') der Bypass-Abgasstrom (6") und/oder der wenigstens eine Abzweigabgasstrom (6"', 20) von einer Waste-Gate-Anordnung einer entsprechend zugeordneten Abgasturbine abgezweigt wird.

12. Vorrichtung nach einem der Ansprüche 9 bis 11, **dadurch gekennzeichnet, dass** eine Motorstau- und/oder Motorbremsklappe (27) stromauf einer Abgasturbine (3) angeordnet ist, und
dass ein parallel zu dieser Motorstau- und/oder Motorbremsklappe (27) angeordneter Schusskanal vorgesehen ist, über den Abgas (26), insbesondere im Motorbremsbetrieb, mit definierten Druck und/oder Geschwindigkeit auf das Laufrad einer Abgasturbine (3) geleitet wird.

13. Vorrichtung nach einem der Ansprüche 9 bis 12, **dadurch gekennzeichnet, dass** der das ammoniakhaltige Reduktionsmittel aufweisende Bypass-Abgasstrom (6") dem Haupt-Abgasstrom (6') stromab einer Motorstau- oder Motorbremsklappe (14), die der Anhebung des Schleppmoments im Bremsbetrieb dient, zurückgeführt wird.

14. Vorrichtung nach einem der Ansprüche 9 bis 13, **dadurch gekennzeichnet, dass** eine Motorstau- oder Motorbremsklappe (27) stromauf einer Abgasturbine (3) angeordnet ist und der Bypass-Abgasstrom (6") wenigstens zum Teil stromauf dieser Motorstau- oder Motorbremsklappe (27) entnommen wird.

15. Vorrichtung nach Anspruch 13 oder 14, **dadurch gekennzeichnet, dass** die Motorstau- oder Motorbremsklappe (14, 27) als Absperr- und/oder Drosseleinrichtung verwendet wird.

## Claims

1. Method to purify an exhaust gas flow of a combustion engine loaded with exhaust gas, in which nitrogen oxide is removed from the exhaust gas flow by means of selective catalytic reduction (SCR), wherein the exhaust gas flow (6) is divided or subdivided upstream of an exhaust gas turbine of an exhaust gas turbocharger and upstream of at least one SCR-catalyst (12) into a main exhaust gas flow (6') that is carried to the exhaust gas turbine (3; 3') in a main exhaust gas line and into at least one bypass exhaust gas flow (6") that is carried in a bypass line and is carried past the exhaust gas turbine, said bypass exhaust gas flow (6") preferably being split off from the main exhaust gas flow, wherein a defined quantity of a reducing agent precursor (11) to be disintegrated is supplied to the bypass exhaust gas flow (6") in defined combustion engine operating states, said reducing agent precursor (11) being converted into a reducing agent, preferably into ammonia, in a reactor (9), which is fluidically connected to the bypass exhaust gas flow (6"), said reducing agent being discharged from the reactor (9) by means of the bypass exhaust gas flow (6") and being supplied to the main exhaust gas flow (6') upstream of the SCR-catalyst (12), and
wherein at least one isolating and/or throttle device (7, 8; 21; 25; 27) is provided that is coupled by means of a control and/or regulating device and is able to be controlled depending on defined operating parameters,
**characterised in that**,
at least one branch line is split off from the main exhaust gas line upstream of the exhaust gas turbine (3, 3'), said branch line discharging into the bypass line upstream of the reactor (9) and/or upstream of a mixing position (10) for a reducing agent precursor (11) and by means of which a branch exhaust gas flow (6"', 20) splits off from the main exhaust gas flow (6') via the control and/or regulating device (15), which controls at least one isolating and/or throttle device (7, 8; 21; 25; 27), depending on defined combustion engine operating states, in particular outside of a defined free-wheeling and/or light load operation of the combustion engine (1), and/or depending on defined threshold values, in particular depending on defined temperature and/or exhaust gas mass threshold values at or in or after the reactor and/or of the exhaust gas flows in front of and/or behind the exhaust gas turbine (3, 3'), also controlled or regulated alternatively or additionally to the bypass-exhaust gas flow (6").

2. Method according to claim 1, **characterised in that**, in the case of a temperature that exceeds a defined temperature threshold at or in or after the reactor (9) and/or of the bypass exhaust gas flow (6") and/or in the case of a main exhaust gas flow (6') that reaches a defined temperature threshold upstream of the exhaust gas turbine (3) and/or in the case of an exhaust gas flow reaching a defined exhaust gas flow threshold value being exceeded before and/or after the exhaust gas turbine (3; 3'), at least one isolating and/or throttle device (8; 25), which regulates the quantity of the split off bypass exhaust gas flow (6") and is preferably arranged in a waste-gate line and/or in the bypass line, is controlled such that this substantially restricts the branching of the hot bypass exhaust gas flow (6") upstream of the exhaust gas turbine (3) or isolates it in a defined scope, such that a defined branch exhaust gas flow (6"', 20), splits off from the main exhaust gas flow downstream of the exhaust gas turbine, flows to the bypass line, wherein it is preferably provided that this branch exhaust gas flow (6"', 20) is split off and/or flows to the bypass line until the temperature of this branch exhaust gas flow (6"', 20) and/or the temperature at or in or after the reactor (9) exceeds a defined temperature threshold value and/or the exhaust gas flow in front of and/or behind the exhaust gas turbine (3, 3') exceeds a defined exhaust gas flow threshold value, and
that, in the case of a temperature that does not exceed a defined temperature threshold value in or at or after the reactor (9) and/or of the branch exhaust gas flow (6"', 20) and/or in the case an exhaust gas flow reaching a defined exhaust gas flow threshold value not being exceeded before and/or after the exhaust gas turbine (3; 3'), the isolating and/or throttle device (8;25) is opened such that a opposing hot bypass exhaust gas flow (6") is split off upstream of the exhaust gas turbine (3) additionally or alternatively to the branch exhaust gas flow (6"', 20) and is supplied to the reactor (9), wherein it is preferably provided that a defined bypass exhaust gas flow (6") is only split off until the main exhaust gas flow (6') reaches or exceeds a defined temperature threshold value upstream of the exhaust gas turbine (3) and/or the exhaust gas flow reaches or exceeds a defined exhaust gas flow threshold value in front of and/or behind the exhaust gas turbine (3; 3').

3. Method according to claim 1 or 2, **characterised in that**, in the case of a temperature that exceeds a defined temperature threshold at or in or after the reactor (9) and/or of the bypass exhaust gas flow (6") and/or in the case of a main exhaust gas flow (6') reaching a defined temperature threshold value upstream of the exhaust gas turbine (3) and/or in the case an exhaust gas flow reaching a defined exhaust gas flow threshold value being exceeded before and/or after the exhaust gas turbine (3; 3'), a first isolating and/or throttle device (8; 25) that regulates the quantity of split-off bypass exhaust gas flow (6") and is preferably arranged in the bypass line is controlled, such that this substantially restricts the branching of the hot bypass exhaust gas flow (6") upstream of the exhaust gas turbine (3) or isolates it in a defined scope, while a second isolating and/or throttle device (7; 21) that is arranged upstream of the exhaust gas turbine (3) and regulates the quantity of the exhaust gas flow (6"', 20) and is preferably arranged in branch line is controlled such that a defined split off exhaust gas flow (6"', 20) flows to the bypass line, wherein it is preferably provided that this branch exhaust gas flow (6"', 20) flows to the bypass line until the temperature of this branch exhaust gas flow (6"', 20) and/or the temperature at or in or after the reactor (9) exceeds a defined temperature threshold value and/or the exhaust gas flow exceeds a defined exhaust gas threshold value upstream or downstream of the exhaust gas turbine, and
that, in the case of a temperature that does not exceed a defined temperature threshold value in or at or after the reactor (9) and/or of the branch exhaust gas flow (6"', 20) and/or in the case an exhaust gas flow reaching a defined exhaust gas flow threshold value not being exceeded before and/or after the exhaust gas turbine (3; 3'), the second isolating and/or throttle device (7; 21) substantially restricts the branch exhaust gas flow (6"', 20) or limits it to a defined mass, while the first isolating and/or throttle device (8; 25) is opened such that an opposing hot bypass exhaust gas flow (6") is split off upstream of the exhaust gas turbine (3) additionally or alternatively to the exhaust gas flow (6"', 20) and is supplied to the reactor (9), wherein it is preferably provided that a defined bypass exhaust gas flow (6") is only split off until the main exhaust gas flow (6') reaches or exceeds a defined temperature threshold value downstream of the exhaust gas turbine and/or exhaust gas threshold value downstream of the exhaust gas turbine (3).

4. Method according to one of claims 1 to 3, **characterised in that** several exhaust gas turbines (3; 3') are arranged in the main exhaust gas flow (6') and the bypass exhaust gas flow (6") is split off upstream of one of the exhaust gas turbines (3) and the branch gas flow (6"', 20) is split off downstream of one of the exhaust gas turbines (3;3'), wherein, in each case, the branch exhaust gas flow (6"', 20) is split off from the main exhaust gas flow (6') downstream of the bypass exhaust gas flow (6"), wherein it is preferably provided that a branch line is provided upstream and downstream of each exhaust gas turbine (3; 3') that splits off from the main exhaust gas line and leads to the bypass line as well as discharging upstream of the reactor (9) and/or upstream of a mixing position (10) for a reducing agent precursor into the bypass line, wherein the several branch lines are able to be restricted and/or isolated and/or opened depending on defined combustion engine operating states and/or depending on defined threshold values either individually or together by means of a least one isolating and/or throttle device that is controlled to a defined extent by the control and/or regulation device (15).

5. Method according to one of the preceding claims, **characterised in that**, in the case of a single-level charge having an exhaust gas turbine (3), the bypass exhaust gas flow (6") is split off from a waste-gate arrangement (23) of the exhaust gas turbine (3) or that in the case of a multi-level charge with several gas turbines (3, 3'), the bypass exhaust gas flow (6") and/or the at least one branch exhaust gas flow (6"', 20) is split off from a waste-gate arrangement of a correspondingly allocated gas turbine.

6. Method according to one of the preceding claims, **characterised in that** an engine stop and/or engine brake valve (27) is arranged upstream of an exhaust gas turbine (3), and
that a channel that is arranged parallel to this engine stop and/or engine brake valve (27) is provided, via which exhaust gas (26), in particular in the engine braking operation, is led onto a rotor of an exhaust gas turbine (3) with a defined pressure and/or speed.

7. Method according to one of the preceding claims, **characterised in that** the bypass exhaust gas flow (6") having the reducing agent containing ammonia is returned to the main gas flow (6') downstream of an engine stop or engine brake valve (14), which is preferably used as a isolating and/or throttle device and/or which serves the increase in the drag torque in the braking operation, and/or that an engine stop or engine brake valve (27), which is preferably used as a isolating and/or throttle device, is arranged upstream of an exhaust gas turbine (3) and the bypass exhaust gas flow (6") is at least partially extracted upstream of this engine stop or engine brake valve (27).

8. Method according to one of the preceding claims, **characterised in that** the reactor (9) has a catalyst or a catalyst coating, which promotes the disintegration of the reducing agent precursor (11), in particular of an ammonia precursor, wherein it is furthermore preferably provided that, at the same time, the reactor-side catalyst or the reactor-side catalyst coating for the disintegration of the reducing agent precursor has a NO_{X}-reducing activity, wherein it is preferably provided that urea and/or an aqueous urea solution and/or guanidine and/or guanidine salts, in particular guanidine formate and/or ammonium formate and/or ammonium carbonate is used as a reducing agent precursor (11).

9. Device to purify an exhaust gas flow of a combustion engine loaded with exhaust gas by means of selective catalytic reduction (SCR), in particular to carry out a method according to one of the method claims above, having an exhaust gas flow (6), which is divided or able to be subdivided upstream of an exhaust gas turbine of an exhaust gas turbo charger and upstream of at least one SCR catalyst (12) into a main exhaust gas flow (6'), carried to the exhaust gas turbine in main exhaust gas line, and in at least one bypass exhaust gas flow (6"), carried in a bypass line, said bypass exhaust gas flow being able to be carried past the exhaust gas turbine, wherein a defined quantity of a reducing agent precursor (11) to be disintegrated is able to be supplied to the bypass exhaust gas flow (6") in defined combustion engine operating states, said reducing agent precursor (11) being converted into a reducing agent, preferably into ammonia, in a reactor (9), which is fluidically connected to the bypass exhaust gas flow (6"), said reducing agent being able to be discharged from the reactor (9) by means of the bypass exhaust gas flow (6") and being able to be supplied to the main exhaust gas flow (6') upstream of the SCR-catalyst (12), and wherein at least one isolating and/or throttle device (7, 8; 21; 25; 27) is provided that is coupled by means of a control and/or regulating device and is able to be controlled depending on defined operating parameters,
**characterised in that**,
at least one branch line is split off from the main exhaust gas line upstream of the exhaust gas turbine (3, 3'), said branch line discharging into the bypass line upstream of the reactor (9) and/or upstream of a mixing position (10) for a reducing agent precursor (11) and by means of which a branch exhaust gas flow (6"', 20) split off from the main exhaust gas flow (6') via the control and/or regulating device (15), which controls at least one isolating and/or throttle device (7, 8; 21; 25; 27), depending on defined combustion engine operating states, in particular outside of a defined free-wheeling and/or light load operation of the combustion engine (1), and/or depending on defined threshold values, in particular depending on defined temperature and/or exhaust gas mass threshold values at or in or after the reactor and/or of the exhaust gas flows in front of and/or behind the exhaust gas turbine (3, 3'), also controlled or regulated alternatively or additionally to the bypass-exhaust gas flow (6").

10. Device according to claim 9, **characterised in that** several exhaust gas turbines (3, 3') are arranged in the main exhaust gas line and the bypass line is split off upstream of one of the exhaust gas turbines (3) and the at least one branch line is split off downstream of one of the exhaust gas turbines (3, 3'), wherein, in each case, the branch line is split off from the main exhaust gas line downstream of the bypass line, wherein it is preferably provided that a branch line is provided upstream and downstream of each exhaust gas turbine (3, 3'), which splits off from the main exhaust gas line and is carried to the bypass line as well as discharging into the bypass line upstream of the reactor (9) and/or upstream of a mixing position (10) for a reducing agent precursor (11), wherein the several branch lines are able to be restricted and/or isolated and/or opened depending on defined combustion engine operating states and/or depending on defined reactor-reaction parameters, either individually or together by means of isolating and/or throttle devices controlled to a defined extent by the control and/or regulation device.

11. Device according to claim 9 or 10, **characterised in that** in the case of a single-level charge having an exhaust gas turbine (3), the bypass exhaust gas flow (6") is split off from a waste-gate arrangement (26) of the exhaust gas turbine (3), or that in the case of a multi-level charge having several exhaust gas turbines (3, 3'), the bypass exhaust gas flow (6") and/or the at least one branch exhaust gas flow (6"', 20) is split off from a waste-gate arrangement of a correspondingly allocated gas turbine.

12. Device according to one of the claims 9 to 11, **characterised in that** an engine stop and/or engine brake valve (27) is arranged upstream of an exhaust gas turbine (3), and
that a channel arranged parallel to this engine stop and/or engine brake valve (27) is provided, via which exhaust gas (26), in particular in the engine brake operation, is led onto the rotor of an exhaust gas turbine (3).

13. Device according to one of claims 9 to 12, **characterised in that** the bypass exhaust gas flow (6") having the reducing agent containing ammonia, is returned to the main exhaust gas flow (6') downstream of an engine stop or engine brake valve (14), which serves to increase the drag torque in the braking operation.

14. Device according to one of claims 9 to 13, **characterised in that** an engine stop or engine brake valve (27) is arranged upstream of an exhaust gas turbine (3) and the bypass exhaust gas flow (6") is extracted at least partially upstream of this engine stop or engine brake valve (27).

15. Device according to claim 13 or 14, **characterised in that** the engine stop or engine brake valve (14, 27) is used as a isolating and/or throttle device.

## Revendications

1. Procédé de nettoyage d'un flux de gaz d'échappement d'un moteur à combustion interne chargé en gaz d'échappement, selon lequel des oxydes d'azote sont éliminés du flux de gaz d'échappement au moyen de la réduction catalytique sélective (RCS), sachant que le flux de gaz d'échappement (6) est divisé ou séparé, en amont d'une turbine à gaz d'échappement d'un turbocompresseur à gaz d'échappement et en amont d'au moins un catalyseur RCS (12), en un flux de gaz d'échappement principal (6') s'écoulant dans une conduite de gaz d'échappement principale en direction de la turbine à gaz d'échappement (3 ; 3') et en au moins un flux de gaz d'échappement de bypass (6") s'écoulant dans une conduite de bypass de manière à passer le long de la turbine à gaz d'échappement, lequel flux de gaz d'échappement de bypass est dévié de préférence du flux de gaz d'échappement principal, sachant qu'une quantité définie d'une substance précurseur à base d'agent de réduction (11) est amenée au flux de gaz d'échappement de bypass (6") dans des états de fonctionnement définis des moteurs à combustion interne, laquelle substance précurseur à base d'agent de réduction est transformée dans un réacteur (9) relié selon la technique des fluides au flux de gaz d'échappement de bypass (6"), en un agent de réduction, de préférence en de l'ammoniaque, lequel agent de réduction est évacué du réacteur (9) au moyen du flux de gaz d'échappement de bypass (6") et est amené en amont du catalyseur RCS (12) au flux de gaz d'échappement principal (6'), et
sachant qu'est prévu au moins un système d'arrêt et/ou d'étranglement (7, 8 ; 21 ; 25 ; 27) couplé à un dispositif de commande et/ou de régulation et pouvant être commandé selon des paramètres de fonctionnement définis,
**caractérisé en ce**
**qu'**est déviée en aval de la turbine à gaz d'échappement (3 ; 3'), de la conduite de gaz d'échappement principale, au moins une conduite de dérivation, qui débouche, en amont du réacteur (9) et/ou en amont d'un emplacement d'introduction (10) pour une substance précurseur à base d'agent de réduction (11), dans la conduite de bypass et qui permet de dévier du flux de gaz d'échappement principal (6') et d'amener à la conduite de bypass un flux de gaz d'échappement de dérivation (6"', 20) en fonction d'états de fonctionnement définis des moteurs à combustion interne, en particulier en dehors d'un fonctionnement défini à vide et/ou à faible charge du moteur à combustion interne (1), et/ou en fonction de valeurs de seuil définies, en particulier en fonction de valeurs de seuil définies de température et/ou de masses de gaz d'échappement au niveau du réacteur, dans ou après ce dernier et/ou des flux de gaz d'échappement avant et/ou après la turbine à gaz d'échappement (3 ; 3'), en variante ou éventuellement en complément du flux de gaz d'échappement de bypass (6"), de manière commandée ou régulée par l'intermédiaire du dispositif de commande et/ou de régulation (15) commandant au moins un dispositif d'arrêt et/ou d'étranglement (7, 8 ; 21 ; 25 ; 27).

2. Procédé selon la revendication 1, **caractérisé en ce que** dans le cas d'une température, dépassant une valeur de seuil de température définie, au niveau du réacteur (9), dans ou après ce dernier et/ou du flux de gaz d'échappement de bypass (6") et/ou dans le cas d'un flux de gaz d'échappement principal (6') atteignant une valeur de seuil de température définie en aval de la turbine à gaz d'échappement (3) et/ou en cas de dépassement d'un flux de gaz d'échappement atteignant une valeur de seuil de gaz d'échappement avant et/ou après la turbine à gaz d'échappement (3 ; 3'), au moins un système d'arrêt et/ou d'étranglement (8 ; 25) régulant la quantité du flux de gaz d'échappement de bypass (6") dévié, disposé de préférence dans une conduite à waste-gate et/ou dans la conduite de bypass est commandé de telle manière qu'il arrête essentiellement ou étrangle dans une certaine mesure la dérivation du flux de gaz d'échappement de bypass (6") très chaud en amont de la turbine à gaz d'échappement (3) de sorte qu'un flux de gaz d'échappement de dérivation (6"', 20) défini, dévié du flux de gaz d'échappement principal (6') en aval de la turbine à gaz d'échappement s'écoule en direction de la conduite de bypass, sachant qu'il est prévu de manière préférée que ledit flux de gaz d'échappement de dérivation (6"', 20) est dévié et/ou s'écoule en direction de la conduite de bypass tant que la température dudit flux de gaz d'échappement de dérivation (6"', 20) et/ou la température au niveau du réacteur (9), dans ce dernier ou après ce dernier, est inférieure à une valeur de seuil de température définie et/ou tant que le flux de gaz d'échappement avant et/ou après la turbine à gaz d'échappement (3 ; 3') est inférieur à une valeur de seuil de gaz d'échappement définie, et
**en ce qu'**en présence d'une température inférieure à une valeur de seuil, dans le réacteur (9) ou au niveau de ou après ce dernier et/ou du flux de gaz d'échappement de dérivation (6"', 20) et/ou en cas de dépassement d'un flux de gaz d'échappement atteignant une valeur de seuil de flux de gaz d'échappement définie avant et/ou après la turbine à gaz d'échappement (3 ; 3'), le système d'arrêt et/ou d'étranglement (8 ; 25) est ouvert de telle manière qu'en plus ou en variante du flux de gaz d'échappement de dérivation (6"', 20), un flux de gaz d'échappement de bypass (6") comparativement très chaud est dévié en amont de la turbine à gaz d'échappement (3) et est amené au réacteur (9), sachant qu'il est prévu de manière préférée qu'un flux de gaz d'échappement de bypass (6") défini est dévié uniquement tant le flux de gaz d'échappement principal (6') atteint ou dépasse, en aval de la turbine à gaz d'échappement (3), une valeur de seuil de température définie et/ou tant que le flux de gaz d'échappement atteint ou dépasse avant et/ou après la turbine à gaz d'échappement (3 ; 3'), une valeur de seuil de flux de gaz d'échappement définie.

3. Procédé selon la revendication 1 ou 2, **caractérisé en ce que** dans le cas d'une température, dépassant une valeur de seuil de température définie, au niveau du réacteur (9) ou dans ou après ce dernier et/ou du flux de gaz d'échappement de bypass (6") et/ou dans le cas d'un flux de gaz d'échappement principal (6') atteignant une valeur de seuil de température définie en aval de la turbine à gaz d'échappement (3) et/ou en cas de dépassement d'un flux de gaz d'échappement atteignant une valeur de seuil de gaz d'échappement définie avant et/ou après la turbine à gaz d'échappement (3 ; 3'), un premier système d'arrêt et/ou d'étranglement (8 ; 25) régulant la quantité du flux de gaz d'échappement de bypass (6") dévié, disposé de préférence dans la conduite de bypass est commandé de telle manière que ce dernier arrête essentiellement ou étrangle dans une certaine mesure, en amont de la turbine à gaz d'échappement (3), la dérivation du flux de gaz d'échappement de bypass (6") très chaud, tandis qu'un deuxième système d'arrêt et/ou d'étranglement (7 ; 21) disposé en aval de la turbine à gaz d'échappement (3) et régulant la quantité du flux de gaz d'échappement de dérivation (6"', 20), disposé de préférence dans la conduite de dérivation, est commandé de telle manière qu'un flux de gaz d'échappement de dérivation (6"', 20) défini s'écoule en direction de la conduite de bypass, sachant qu'il est prévu de préférence que ledit flux de gaz d'échappement de dérivation (6"', 20) s'écoule en direction de la conduite de bypass tant que la température dudit flux de gaz d'échappement de dérivation (6"', 20) et/ou tant que la température au niveau du réacteur (9), dans ou après ce dernier, est inférieure à une valeur de seuil de température définie et/ou tant que le flux de gaz d'échappement en amont ou en aval de la turbine à gaz d'échappement est inférieur à une valeur de seuil de flux de gaz d'échappement définie, et
**en ce qu'**en présence d'une température, inférieure à une valeur de seuil de température définie, dans le réacteur (9), au niveau de ou après ce dernier et/ou du flux de gaz d'échappement de dérivation (6"', 20), et/ou en cas de dépassement d'un flux de gaz d'échappement atteignant une valeur de seuil de flux de gaz d'échappement définie avant et/ou après la turbine de gaz d'échappement (3 ; 3'), le deuxième système d'arrêt et/ou d'étranglement (7 ; 21) arrête essentiellement et/ou étrangle dans une certaine mesure le flux de gaz d'échappement de dérivation (6"', 20), tandis que le premier système d'arrêt et/ou d'étranglement (8 ; 25) est ouvert de telle manière qu'en plus ou en variante du flux de gaz d'échappement de dérivation (6"', 20), un flux de gaz d'échappement de bypass (6") comparativement très chaud est dévié en amont de la turbine à gaz d'échappement (3) et est amené au réacteur (9), sachant qu'il est prévu de manière préférée, qu'un flux de gaz d'échappement de bypass (6") défini est dévié uniquement jusqu'à ce que le flux de gaz d'échappement principal (6') atteigne ou dépasse, en aval de la turbine à gaz d'échappement (3), une valeur de seuil de température définie et/ou une valeur de seuil de gaz d'échappement définie.

4. Procédé selon l'une quelconque des revendications 1 à 3, **caractérisé en ce que** plusieurs turbines à gaz d'échappement (3 ; 3') sont disposées dans le flux de gaz d'échappement principal (6'), et **en ce que** le flux de gaz d'échappement de bypass (6") est dévié en amont d'une des turbines à gaz d'échappement (3) et le flux de gaz d'échappement de dérivation (6"', 20) est dévié en aval d'une des turbines à gaz d'échappement (3, 3'), sachant que le flux de gaz de dérivation (6"', 20) est dévié dans tous les cas, en aval du flux de gaz d'échappement de bypass (6"), du flux de gaz d'échappement principal (6'), sachant qu'il est prévu de manière préférée qu'une conduite de dérivation issue de la conduite de gaz d'échappement principale et menant à la conduite de bypass, débouchant dans la conduite de bypass en amont du réacteur (9) et/ou en amont de l'emplacement d'introduction (10) pour une substance précurseur à base d'agent de réduction est prévue en amont et en aval de chaque turbine à gaz d'échappement (3 ; 3'), sachant que les nombreuses conduites de dérivation peuvent être arrêtées et/ou étranglées et/ou ouvertes en fonction d'états de fonctionnement définis des moteurs à combustion interne et/ou en fonction de valeurs de seuil définies au choix séparément ou conjointement au moyen d'au moins un système d'arrêt et/ou d'étranglement commandé dans une certaine mesure par le dispositif de commande et/ou de régulation (15).

5. Procédé selon l'une quelconque des revendications précédentes, **caractérisé en ce que** dans le cas d'un chargement en une phase à l'aide d'une turbine à gaz d'échappement (3), le flux de gaz d'échappement de bypass (6") est dévié d'un ensemble waste-gate (23) de la turbine à gaz d'échappement (3), ou **en ce que** dans le cas d'un chargement en plusieurs phases à l'aide de plusieurs turbines à gaz d'échappement (3, 3'), le flux de gaz d'échappement de bypass (6") et/ou ledit au moins un flux de gaz d'échappement de dérivation (6"', 20) sont déviés d'un ensemble waste-gate d'une turbine à gaz d'échappement associée de manière correspondante.

6. Procédé selon l'une quelconque des revendications précédentes, **caractérisé en ce qu'**un volet de retenue et/ou de freinage de moteur (27) est disposé en amont d'une turbine à gaz d'échappement (3), et
**en ce qu'**un canal d'injection disposé de manière parallèlement audit volet de retenue et/ou de freinage de moteur (27) est prévu, par l'intermédiaire duquel des gaz d'échappement (26), sont véhiculés, en particulier lorsque le moteur se trouve en mode de freinage, à une pression et/ou une vitesse définies sur la roue à aubes d'une turbine à gaz d'échappement (3).

7. Procédé selon l'une quelconque des revendications précédentes, **caractérisé en ce que** le flux de gaz d'échappement de bypass (6") présentant l'agent de réduction contenant de l'ammoniaque est envoyé vers le flux de gaz d'échappement principal (6'), en aval d'un volet de retenue ou de freinage de moteur (14), qui est utilisé de préférence en tant que système d'arrêt et/ou d'étranglement et/ou qui sert à supprimer le couple de traînée du mode de freinage, et/ou **en ce qu'**un volet de retenue ou de freinage de moteur (27), qui est utilisé de préférence en tant que système d'arrêt et/ou d'étranglement, est disposé en amont d'une turbine à gaz d'échappement (3) et **en ce que** le flux de gaz d'échappement de bypass (6") est prélevé au moins en partie en amont dudit volet de retenue ou de freinage de moteur (27).

8. Procédé selon l'une quelconque des revendications précédentes, **caractérisé en ce que** le réacteur (9) présente un catalyseur ou un revêtement de catalyseur, qui favorise la décomposition de la substance précurseur à base d'agent de réduction (11), en particulier d'une substance précurseur à base d'ammoniaque, **en ce qu'**il est en outre prévu de manière préférée que le catalyseur côté réacteur ou que le revêtement de catalyseur côté réacteur présente aux fins de la décomposition de la substance précurseur à base d'agent de réduction à la fois une activité de réduction de NOₓ, **en ce qu'**il est prévu de manière préférée qu'on utilise en tant que substance précurseur à base d'agent réducteur (11) de l'urée et/ou une solution aqueuse à base d'urée et/ou de la guanidine et/ou des sels de guanidine, en particulier du formiate de guanidine et/ou du formiate d'ammonium et/ou du carbamate d'ammonium.

9. Dispositif de nettoyage d'un flux de gaz d'échappement d'un moteur à combustion interne chargé en gaz d'échappement au moyen de la réduction catalytique sélective (RCS), en particulier servant à la mise en oeuvre d'un procédé selon l'une quelconque des revendications précédentes, comprenant un flux de gaz d'échappement (6), qui est divisé ou séparé, en amont d'une turbine à gaz d'échappement d'un turbocompresseur à gaz d'échappement et en amont d'au moins un catalyseur RCS (12), en un flux de gaz d'échappement principal (6') acheminé dans une conduite de gaz d'échappement principale en direction de la turbine à gaz d'échappement et en au moins un flux de gaz d'échappement de bypass (6") acheminé dans une conduite de bypass, lequel flux de gaz d'échappement de bypass peut être acheminé de manière à passer le long de la turbine à gaz d'échappement, sachant qu'une quantité définie d'une substance précurseur à base d'agent de réduction (11) à décomposer peut être amenée au flux de gaz d'échappement de bypass (6") dans des états de fonctionnement définis des moteurs à combustion interne, laquelle est transformée dans un réacteur (9), qui est relié selon la technique des fluides au flux de gaz d'échappement de bypass (6"), en un agent de réduction, en particulier en ammoniaque, qui peut être évacué du réacteur (9) au moyen du flux de gaz d'échappement de bypass (6") et qui peut être amené au flux de gaz d'échappement principal (6') en amont du catalyseur RCS (12), et
sachant qu'est prévu au moins un système d'arrêt et/ou d'étranglement (7, 8 ; 21 ; 25 ; 27) couplé à un dispositif de commande et/ou de régulation et pouvant être commandé en fonction de paramètres de fonctionnement définis,
**caractérisé en ce**
**qu'**au moins une conduite de dérivation est issue de la conduite de gaz d'échappement principale en aval de la turbine à gaz d'échappement (3 ; 3'), laquelle conduite de dérivation débouche dans la conduite de bypass en amont du réacteur (9) et/ou en amont d'un emplacement d'introduction (10) pour une substance précurseur à base d'agent de réduction (11) et qui permet de dévier du flux de gaz d'échappement principal (6') ou d'amener à la conduite de bypass un flux de gaz d'échappement de dérivation (6"', 20) en fonction d'états de fonctionnement définis des moteurs à combustion interne, en particulier en dehors d'un fonctionnement à vide et/ou à charge faible défini du moteur à combustion interne (1), et/ou en fonction de valeurs de seuil définies, en particulier en fonction de valeurs de seuil de température et/ou de masses de gaz d'échappement définies au niveau du réacteur ou dans ou après ce dernier et/ou des flux de gaz d'échappement avant et/ou après la turbine à gaz d'échappement (3 ; 3'), en variante ou en complément du flux de gaz d'échappement de bypass (6"), de manière commandée ou régulée par l'intermédiaire du dispositif de commande et/ou de régulation (15) commandant ledit au moins un dispositif d'arrêt et/ou d'étranglement (7, 8 ; 21 ; 25 ; 27).

10. Dispositif selon la revendication 9, **caractérisé en ce que** plusieurs turbines à gaz d'échappement (3 ; 3') sont disposées dans la conduite de gaz d'échappement principale, et **en ce que** la conduite de bypass est déviée, en amont d'une des turbines à gaz d'échappement (3) et au moins une conduite de dérivation est déviée en aval d'une des turbines à gaz d'échappement (3 ; 3'), sachant que la conduite de dérivation est déviée dans tous les cas en aval de la conduite de bypass, de la conduite de gaz d'échappement principale, sachant qu'il est prévu de manière préférée qu'une conduite de dérivation issue de la conduite de gaz d'échappement principale et guidée en direction de la conduite de bypass et débouchant dans la conduite bypass en amont du réacteur (9) et/ou en amont d'un emplacement d'introduction (10) pour une substance précurseur à base d'agent de réduction (11) est prévue en amont et en aval de chaque turbine à gaz d'échappement (3, 3'), sachant que les nombreuses conduites de dérivation peuvent être arrêtées et/ou étranglées et/ou ouvertes en fonction d'états de fonctionnement définis des moteurs à combustion interne et/ou en fonction de paramètres de réaction définis du réacteur, au choix, séparément ou conjointement, au moyen de systèmes d'arrêt et/ou d'étranglement pouvant être commandés dans une certaine mesure par le dispositif de commande et/ou de régulation.

11. Dispositif selon la revendication 9 ou 10, **caractérisé en ce que** dans le cas d'un chargement en une phase à l'aide d'une turbine à gaz d'échappement (3), le flux de gaz d'échappement de bypass (6") est dévié d'un ensemble waste-gate (26) de la turbine à gaz d'échappement (3), ou **en ce que** dans le cas d'un chargement en plusieurs phases à l'aide de plusieurs turbines à gaz d'échappement (3, 3'), le flux de gaz d'échappement de bypass (6") et/ou ledit au moins un flux de gaz d'échappement de dérivation (6"', 20) sont déviés d'un ensemble waste-gate d'une turbine à gaz d'échappement associée de manière correspondante.

12. Dispositif selon l'une quelconque des revendications 9 à 11, **caractérisé en ce qu'**un volet de retenue et/ou de freinage de moteur (27) est disposé en amont d'une turbine à gaz d'échappement (3), et
**en ce qu'**est prévu un canal d'injection disposé de parallèlement audit volet de retenue et/ou de freinage de moteur (27), par l'intermédiaire duquel canal d'injection des gaz d'échappement (26), en particulier dans le mode de freinage de moteur, est conduit sur la roue à aubes d'une turbine à gaz d'échappement (3) à une pression et/ou à une vitesse définies.

13. Dispositif selon l'une quelconque des revendications 9 à 12, **caractérisé en ce que** le flux de gaz d'échappement de bypass (6") présentant l'agent de réduction contenant de l'ammoniaque est ramené au flux de gaz d'échappement principal (6') en aval d'un volet de retenue ou de freinage de moteur (14), qui sert à supprimer le couple de traînée dans le mode de freinage.

14. Dispositif selon l'une quelconque des revendications 9 à 13, **caractérisé en ce qu'**un volet de retenue ou de freinage de moteur (27) est disposé en amont d'une turbine à gaz d'échappement (3), et **en ce que** le flux de gaz d'échappement de bypass (6") est prélevé au moins en partie en amont dudit volet de retenue ou de freinage de moteur (27).

15. Dispositif selon la revendication 13 ou 14, **caractérisé en ce que** le volet de retenue ou de freinage de moteur (14, 27) est utilisé en tant que système d'arrêt et/ou d'étranglement.
